(19)

**Europäisches Patentamt**
**European Patent Office**
**Office européen des brevets**

(11) **EP 4 247 902 B1**

(12) **EUROPEAN PATENT SPECIFICATION**

(45) Date of publication and mention
of the grant of the patent:
**17.09.2025 Bulletin 2025/38**

(21) Application number: **21827418.1**

(22) Date of filing: **23.11.2021**

(51) International Patent Classification (IPC):
***C09D 5/00*** (2006.01)       ***C09D 5/16*** (2006.01)

(52) Cooperative Patent Classification (CPC):
**C09D 5/00; C09D 5/16**

(86) International application number:
**PCT/IB2021/060877**

(87) International publication number:
**WO 2022/107110 (27.05.2022 Gazette 2022/21)**

(54) **FINISHED PRODUCT COMPRISING NATURAL EXTRACTS AND A PAINT PRODUCT HAVING ANTIBACTERIAL OR BACTERIOSTATIC ACTIVITY EVEN AGAINST GRAM-NEGATIVE BACTERIA, AND USES THEREOF**

FERTIGPRODUKT MIT NATÜRLICHEN EXTRAKTEN UND EINEM ANSTRICHMITTEL MIT ANTIBAKTERIELLER ODER BAKTERIOSTATISCHER WIRKUNG AUCH GEGEN GRAMNEGATIVE BAKTERIEN UND VERWENDUNGEN DAVON

PRODUIT FINI COMPRENANT DES EXTRAITS NATURELS ET UN PRODUIT DE PEINTURE AYANT UNE ACTIVITÉ ANTIBACTÉRIENNE OU BACTÉRIOSTATIQUE MÊME CONTRE DES BACTÉRIES À GRAM NÉGATIF ET SES UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2020   IT 202000028100**
**23.11.2020   IT 202000028106**

(43) Date of publication of application:
**27.09.2023   Bulletin 2023/39**

(73) Proprietor: **Vestatis GmbH**
**20097 Hamburg (DE)**

(72) Inventors:
• **CERANA, Giorgio Stefano**
**20097 Hamburg (DE)**
• **BOS, Peter**
**20097 Hamburg (DE)**
• **FRANCK, Peter**
**20097 Hamburg (DE)**
• **BONER, Thomas Detlef**
**20097 Hamburg (DE)**

(74) Representative: **Benedetto, Marco**
**Marben S.r.l.**
**Via Larga, 16**
**20122 Milano (IT)**

(56) References cited:
**WO-A1-2012/123803       WO-A1-2016/020774**
**WO-A1-2021/100026**

**Description**

The present invention relates to a mixture M comprising or, alternatively, consisting of (a) an usnic acid and/or (b) a salt thereof, preferably said usnic acid and/or salt thereof being in the racemic or dextrorotatory D(+) form. Furthermore, the present invention relates to a semi-finished product PS, preferably in the form of a semi-solid cream or paste, comprising said mixture M and a resin, as well as to a finished product PF, preferably in the form of liquid or dispersion, comprising said semi-finished product PS and a paint product. Said mixture M, said semi-finished product PS and finished product PF show an antibacterial, anti-bacterial proliferative, bacteriostatic, microbicidal, anti-mould, anti-yeast, anti-fungal or antimycotic activity, preferably an activity against Gram-positive and/or Gram-negative bacteria, such as for example those having the scientific name *Klebsiella, Enterobatteriacee, Enterobacter, Pseudomonas* and *Escherichia.* Furthermore, it should be observed that said mixture M, said semi-finished product PS and finished product PF show an antiviral activity, which - combined with an antibacterial activity - allows to argue that said mixture M, said semi-finished product PS and finished product PF exert a sanitising activity on the surfaces where they are applied.

Lastly, the present invention relates to a method for rendering a surface antibacterial, antibacterial proliferative, bacteriostatic, microbicidal, anti-mould, anti-yeast, antifungal or antimycotic, antiviral, preferably against Gram-positive and/or Gram-negative bacteria, and viruses such as for example human coronavirus SARS-CoV-2, said method provides for the application - by means of spray, roller or brush technique - of said mixture M, or said semi-finished product PS or finished product PF, on said surface.

Furthermore, the present invention relates to an inclusion compound (ci) comprising or, alternatively, consisting of: (i) D-usnic acid as enantiomer, or a salt thereof, or mixtures thereof, of natural origin and (ii) beta-cyclodextrins. Said inclusion compound (ci) has an antibacterial or bacteriostatic activity both against Gram-positive pathogenic bacteria and against Gram-negative pathogenic bacteria, such as for example those having the scientific name *Klebsiella, Enterobatteriacee, Enterobacter, Pseudomonas* and *Escherichia.* Furthermore, said inclusion compound (ci) has an antiviral activity, which - combined with an antibacterial activity - allows to argue that a sanitising activity is also exerted on the surfaces where it is applied.

Furthermore, the present invention relates to a use of said inclusion compound (ci) as an antibacterial or bacteriostatic agent against Gram-negative bacteria and against Gram-positive bacteria, but also as an antiviral agent against viruses, such as for example against the human coronavirus SARS-CoV-2. Furthermore, the present invention relates to a liquid composition comprising or, alternatively, consisting of: (a) said inclusion compound (ci); (b) an acrylic resin, a polyurethane resin or an acryl-polyurethane resin, or mixtures thereof; (c) optionally, a pigment or an opacifying agent; and (d) water.

Furthermore, the present invention relates to the use of said liquid composition as varnish or architectural coating for surfaces and walls, preferably as antibacterial or bacteriostatic architectural coating, both against Gram-positive and Gram-negative pathogenic bacteria, such as for example those having the scientific name *Klebsiella, Enterobatteriacee,* Enterobacter, *Pseudomonas* and Escherichia, but also to a use of said liquid composition as varnish or architectural coating for surfaces and walls, preferably as antiviral architectural coating against viruses, such as for example against the human coronavirus SARS-CoV2. Lastly, the present invention relates to a use of cyclodextrins, preferably beta-cyclodextrins such as for example (2-hydroxypropyl)-β-cyclodextrin, as selective complexing agents of D-usnic acid, or a salt thereof, or mixtures thereof, from a racemic mixture of usnic acid, the latter obtained by means of an extraction process also subject of the present invention, starting from a natural material.

Pathogenic microorganisms, also called pathogenic agents, are biological agents responsible for the onset of disease condition in the host organism. They are distinguished in: viruses; prokaryotes: bacteria; eukaryotes: mycetes and protozoa. Pathogenicity, or the general ability to determine a morbid condition, is defined by two factors: (i) virulence, indicating the greater or lesser ability to generate disease; (ii) invasiveness, that is the ability to invade the host's tissues and multiply therein. Invasiveness, in turn, depends on factors such as: adhesiveness, that is the pathogen's ability to bind with the external surface structures thereof to the receptor sites of the host's cells; production of extracellular enzymes which facilitate the destruction of the host's tissues; production of antiphagocytic substances or presence of antiphagocytic capsule, which allow the pathogen to resist the host's defence mechanisms. The increase in the incidence of nosocomial infections (infectious diseases related to care within a health facility), due to transmission of multi-resistant microorganisms, has long been the subject of study and research. Numerous scientific studies show that hospital environmental surfaces play a prominent role in the contamination, in the persistence and in the spread of a variety of microorganisms in the nosocomial environment; such surfaces therefore become a durable reservoir of pathogenic agents in the hospitalisation facilities. In the hospital environment, as well as other environments, there arises the need for limiting the nosocomial bacterial load (and not only), allowing patients to stay in an environment as sterile as possible. The same case may apply to schools, kindergartens, playgrounds or public places such as supermarkets and shopping malls where there is very often a very high bacterial load due to the large number of people. In addition, infectious (pathogenic) microorganisms have evolved into strains capable of withstanding most of the antibiotics available on the market to date. Therefore, it could be very useful to have a treatment for surfaces, for example surfaces made of fabric, hide, wood, glass, plastic, steel, linoleum or concrete walls and floors, using active substances or compounds still unknown to living microorganisms, including drug-resistant ones, so as to make the proliferation of microorganisms, including viruses, on treated surfaces difficult or as low as possible.

Examples of surfaces to be treated, without limitation, can for example be found in a medical clinic, emergency department, hospital, dental clinic, playground, kindergarten, school or washrooms and toilet facilities for example present in public or private facilities, or for example in supermarkets and shopping malls or playgrounds.

In Italy, the probability of contracting an infection during a hospital stay is 6%, with a number of cases ranging from 450,000 to 700,000 each year and an estimated annual number of deaths of around 7,800. The latter statistic gives Italy an unfortunate primacy among European countries.

At present, the environmental contamination of the surfaces is fought using detergent compounds or synthetic disinfectants which, besides being ineffective or in any case not suitable to prevent a short-term re-contamination (within 30 minutes of disinfection), have a considerable environmental impact.

WO2016/020774 relates to an elastomeric composition useful for directly making and/or coating medicated and medical devices comprising usnic acid and a polymer. Said composition can be in solid or liquid form and is prepared by coextruding the polymer and the usnic acid at a temperature below 200°C and, if desired, dispersing the extruded product in an organic solvent.

WO2012/123803 describes a method for making medical devices including an antibacteric agent (usnic acid) by a sol-gel process comprising: a first phase of dissolving the organic polymer precursor in a suitable solvent, a following step of adding the inorganic gel grid forming agent to the solution and then adding the usnic acid. This solution can be used for immersing the device to be coated and followed by a necessary crosslinking step by a microwave or UV radiating thermal process.

Therefore, the need is felt to have a surface treatment, an active compound and an active composition having a reduced environmental impact and, possibly, completely of natural origin. Sanitising using synthetic agents alone cannot therefore guarantee a healthy and safe environment in a hospital or a kindergarten or a school, given that it is incapable of keeping the environmental surfaces sanitised over time. Therefore, there is felt the need to be able to have a treatment, an active compound and an active composition with a reduced environmental impact capable of reducing or combating the pathogenic bacterial load or effectively fighting the contamination, the persistence and the transmission of pathogenic bacteria in public and private environments and spaces such as for example in a hospital or kindergarten or school, preventing pathogenic bacteria from propagating and/or developing resistance.

Following a long and intense research and development activity, the Applicant developed a mixture M, a semi-finished product PS containing said mixture M and a resin, a finished product PF containing said semi-finished product PS and a paint product, an inclusion compound (ci) and a composition thereof, all the above capable of providing an adequate response to existing limits, drawbacks and problems. In addition, the Applicant perfected a surface treatment method which allows to render said surfaces treated with a mixture M, a semi-finished product PS containing said mixture M and a resin, a finished product PF containing said semi-finished product PS and a paint product, an inclusion compound (ci) and a composition thereof, antibacterial, antibacterial proliferative, bacteriostatic, microbicidal, anti-mould, anti-yeast, anti-fungal or antimycotic, preferably against Gram-positive and/or Gram-negative bacteria, but also to render said surfaces antiviral against viruses, such as for example against the human coronavirus SARS-CoV-2. Furthermore, it would be desirable to have a technological solution which, besides being effective against pathogenic microorganisms (including viruses), can be applied on all surfaces, is stable under high light, temperature and humidity and also shows good mechanical resistance to abrasion and scratch with respect to the surfaces where this technological solution is applied.

Examples of surfaces where said mixture M, said semi-finished product PS containing said mixture M and a resin, said finished product PF containing said semi-finished product PS and a paint product, said inclusion compound and a composition thereof, can be applied are for example horizontal or vertical surfaces, for example floors, walls or ceilings for example made of concrete, lime or plasterboard, linoleum, or polyvinyl chloride (PVC), polyamide (PA), polyethylene (PE), polyester (PES) or polyethylene terephthalate (PTF). This type of surfaces, without limitation (universal surfaces), can for example be found in a medical clinic, emergency department, hospital, dental clinic, playground, kindergarten, school or washrooms and toilet facilities for example present in public or private facilities, or for example in supermarkets and shopping malls or playgrounds. Or they may be surfaces made of a fabric, a non-woven fabric (NWF), natural leather, artificial or synthetic leather, hide, wood, glass, plastic, polymer, aluminium, steel, linoleum.

Forming an object of the present invention is a mixture M comprising an usnic acid and/or a salt thereof, preferably an usnic acid sodium salt, said usnic acid and/or a salt thereof being preferably of natural origin in the racemic or dextrorotatory D(+) form, having the characteristics as defined in the attached claims.

Forming an object of the present invention is a use of said mixture M as antibacterial, antibacterial proliferative, bacteriostatic, microbicidal, anti-mould, anti-yeast (for example *Candida*), antifungal or antimycotic (for example *Saccharomycetes*), preferably against Gram-positive and/or Gram-negative bacteria, such as for example those having the scientific name *Klebsiella, Enterobatteriacee, Enterobacter, Pseudomonas* and *Escherichia,* said use having the characteristics as defined in the attached claims.

Forming an object of the present invention is the use of said mixture M as an antiviral agent, preferably against the human coronavirus SARS-CoV2, said use having the characteristics as defined in the attached claims.

Forming an object of the present invention is a method for rendering a surface antibacterial, antibacterial proliferative, bacteriostatic, microbicidal, anti-mould, anti-yeast, antifungal or antimycotic, preferably against Gram-positive and/or Gram-negative bacteria, such as for example those having the scientific name *Klebsiella, Enterobatteriacee, Enterobacter, Pseudomonas* and *Escherichia,* said method provides for the application - by means of spray, roller or brush technique - of said mixture M on said surface, said method having the characteristics as reported in the attached claims.

Forming an object of the present invention is a method for rendering a surface antiviral, preferably against the human coronavirus SARS-CoV2, said method provides for the application - by means of spray, roller or brush technique - of said mixture M on said surface, said method having the characteristics as defined in the attached claims.

Preferably, said surface to be treated may also be subjected first to a pre-treatment to increase the adhesion, the stability or the effectiveness of said mixture M on said surface. The pre-treatment may for example be of mechanical type, for example a mechanical abrasion of the surface using hercynite, or it may be of chemical type, for example by applying an impregnating solution or a coating film, for example a polymeric film or a varnish or a fixative or a clinging agent.

Forming an object of the present invention is a semi-finished product PS comprising said mixture M, and a resin, having the characteristics as defined in the attached claims. By way of example, the resins are for example those known to the person skilled in the art of varnishes, enamels and paints (water or organic solvent-based; transparent, glossy or opaque, or coloured), for example one- or two-component resins. The resins are added to said mixture M by means of the procedures and equipment known to the person skilled in the art.

Forming an object of the present invention is a use of a semi-finished product PS as antibacterial, antibacterial proliferative, bacteriostatic, microbicidal, anti-mould, anti-yeast (for example *Candida),* antifungal or antimycotic (for example *Saccharomycetes),* preferably against Gram-positive and/or Gram-negative bacteria, such as for example those having the scientific name *Klebsiella, Enterobatteriacee, Enterobacter, Pseudomonas* and *Escherichia,* said use having the characteristics as defined in the attached claims.

Forming an object of the present invention is the use of a semi-finished product PS as an antiviral agent, preferably against the human coronavirus SARS-CoV2, said use having the characteristics as defined in the attached claims.

Forming an object of the present invention is a method for rendering a surface antibacterial, antibacterial proliferative, bacteriostatic, microbicidal, anti-mould, anti-yeast, antifungal or antimycotic, preferably against Gram-positive and/or Gram-negative bacteria, such as for example those having the scientific name *Klebsiella, Enterobatteriacee, Enterobacter, Pseudomonas* and *Escherichia,* said method provides for the application - by means of spray, roller or brush technique - of said semi-finished product PS on said surface, said method having the characteristics as defined in the attached claims.

Forming an object of the present invention is a method for rendering a surface antiviral, preferably against the human coronavirus SARS-CoV2, said method provides for the application - by means of spray, roller or brush technique - of said semi-finished product PS on said surface, said method having the characteristics as defined in the attached claims.

Preferably, said surface to be treated may also be subjected first to a pre-treatment to increase the adhesion, the stability or the effectiveness of said semi-finished product PS on said surface. The pre-treatment may for example be of mechanical type, for example a mechanical abrasion of the surface using hercynite, or it may be of chemical type, for example by applying an impregnating solution or a coating film, for example a polymeric film or a varnish or a fixative or a clinging agent.

Forming an object of the present invention is a finished product PF comprising said semi-finished product PS, and a paint product, having the characteristics as defined in the attached claims. By way of example, paint products are for example those known to the person skilled in the art of varnishes, enamels and paints (water or organic solvent-based; transparent, glossy or opaque, or coloured). Paint products are added to said semi-finished product PS by means of the procedures and equipment known to the person skilled in the art.

Forming an object of the present invention is a use of a finished product PF as antibacterial, antibacterial proliferative, bacteriostatic, microbicidal, anti-mould, anti-yeast (for example *Candida),* antifungal or antimycotic (for example *Saccharomycetes),* preferably against Gram-positive and/or Gram-negative bacteria, such as for example those having the scientific name *Klebsiella, Enterobatteriacee, Enterobacter, Pseudomonas* and *Escherichia,* said use having the characteristics as defined in the attached claims.

Forming an object of the present invention is a use of a finished product PF as an antiviral agent, preferably against the human coronavirus SARS-CoV2, said use having the characteristics as defined in the attached claims.

Forming an object of the present invention is a method for rendering a surface antibacterial, antibacterial proliferative, bacteriostatic, microbicidal, anti-mould, anti-yeast (for example *Candida),* antifungal or antimycotic (for example *Saccharomycetes),* preferably against Gram-positive and/or Gram-negative bacteria, such as for example those having the scientific name *Klebsiella, Enterobatteriacee, Enterobacter, Pseudomonas* and *Escherichia,* said method provides for the application - by means of spray, roller or brush technique - of said finished product PF on said surface, said method having the characteristics as defined in the attached claims.

Forming an object of the present invention is a method for rendering a surface antiviral, preferably against the human coronavirus SARS-CoV2, said method provides for the application - by means of spray, roller or brush technique - of said semi-finished product PF on said surface, said method having the characteristics as defined in the attached claims.

In an embodiment, said surface to be treated may also be subjected first to a pre-treatment to increase the adhesion, the stability or the effectiveness of said finished product PF on said surface. The pre-treatment may for example be of mechanical type, for example a mechanical abrasion of the surface using hercynite, or it may be of chemical type, for example by applying an impregnating solution or a coating film, for example a polymeric film or a varnish or a fixative or a clinging agent.

In an embodiment, the finished product PF, preferably in the form of liquid or dispersion, comprises said semi-finished product PS, and a paint product, for example a coloured, opacifying or transparent paint product. Said paint product may for example be a water or organic solvent-based varnish, enamel or paint. The combination or association between said semi-finished product PS, preferably in the form of cream or semi-solid paste, with a varnish or enamel or paint, preferably in the form of liquid or dispersion, gives rise to a finished product in the form of a coloured, opacifying or transparent paint, or a finished product in the form of a coloured, opacifying or transparent enamel, or a finished product in the form of a coloured, opacifying or transparent paint. The latter finished products in the form of varnish, enamel or paint can be applied - using the spray or roller or brush technique - on a surface, possibly pre-treated, so as to confer an antiviral or antibacterial, antibacterial proliferative, bacteriostatic, microbicidal, anti-mould, anti-yeast, antifungal or antimycotic property, preferably against Gram-positive and/or Gram-negative bacteria, to said surface for example a surface made of wood or steel or glass or a concrete wall in a hospital.

In another embodiment, the semi-finished product PS or the finished product PF can for example be added to a polymeric material (for example PVC, PE or PTF) from those generally used to prepare a coating film or a coloured, opaque or transparent film. The polymeric film material is then positioned and fixed, for example using a glue or by means of hot heating, on the surface of a table, or a kitchen shelf or a wall, for example made of wood or plastic or aluminium or steel.

In another embodiment, the semi-finished product PS or the finished product PF can for example be added to a solution or a cream from those generally used to treat or polish natural or synthetic leathers of, for example, a chair or armchair.

Furthermore, forming an object of the present invention is an inclusion compound (ci) comprising or, alternatively, consisting of: (i) D-usnic acid as enantiomer, preferably as pure enantiomer, or a salt thereof, or mixtures thereof, and (ii) beta-cyclodextrins, having the characteristics as defined in the attached claims. Said D-usnic acid compound (i) is of natural origin because it is extracted by means of a process starting from a natural material.

Furthermore, forming an object of the present invention is a use of said inclusion compound (ci) as an antibacterial or bacteriostatic agent against Gram-negative bacteria and against Gram-positive bacteria, said use having the characteristics as defined in the attached claims.

Forming an object of the present invention is a use of said the inclusion compound (ci) as an antiviral agent, preferably against the human coronavirus SARS-CoV2, said use having the characteristics as defined in the attached claims.

Furthermore, forming an object of the present invention is a liquid composition comprising or, alternatively, consisting of: (a) said inclusion compound (ci); (b) an acrylic resin, a polyurethane resin or an acryl-polyurethane resin, or mixtures thereof; (c) optionally a pigment or an opacifying agent; and (d) water, having the characteristics as defined in the attached claims.

Furthermore, forming an object of the present invention is a use of said liquid composition as a varnish or architectural coating of surfaces and walls, preferably as an antibacterial or bacteriostatic architectural coating both against Gram-positive bacteria and against Gram-negative bacteria, having the characteristics as defined in the attached claims.

Forming an object of the present invention is a use of said liquid composition as a varnish or architectural coating of surfaces and walls, preferably as an antiviral architectural coating, preferably against the human coronavirus SARS-CoV-2, having the characteristics as defined in the attached claims.

Lastly, forming an object of the present invention is a use of cyclodextrins, preferably beta-cyclodextrins, such as for example (2-hydroxypropyl)-β-cyclodextrin, as selective complexing agents of D-usnic acid, or a salt thereof, or mixtures thereof, having the characteristics as defined in the attached claims.

The present invention will now be illustrated with reference to the attached drawings, provided by way of non-limiting example, wherein:

- Figure 1 exemplifies a flow chart of a process for the production of usnic acid, according to a possible embodiment;
- Figure 2 shows an average distribution of the solid particles of D-usnic acid according to a possible embodiment;

- Figures 3 and 4 illustrate bacterial activities R relating to Example 2 and Example 3, respectively;
- Figure 5 shows the tests used in Example 4;
- Figure 6 illustrates a decrease in the microbial load as discussed in Example 4;
- Figures 7, 8, 9 and 10 show results of the microbiological monitoring discussed in Example 5;

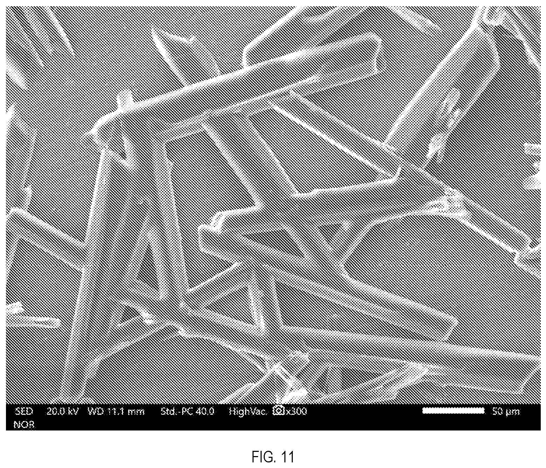

- Figure 11 refers to a microscopic image relating to the initial formation of a crystal lattice (beginning of cross-linking) of usnic acid and/or a salt thereof, after applying the finished product PF, according to the present invention, to a surface;

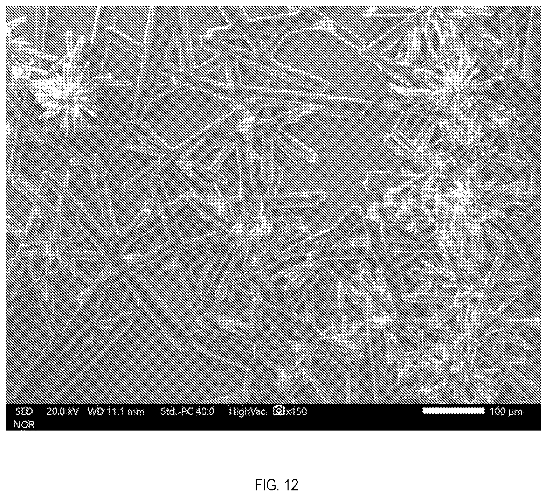

- Figure 12 refers to a microscopic image relating to the flowering of crystals (continuation of cross-linking) of usnic acid and/or a salt thereof, after applying a finished product PF, according to the present invention, to a surface and the solvent, contained in said finished product PF, starts to evaporate from the surface;

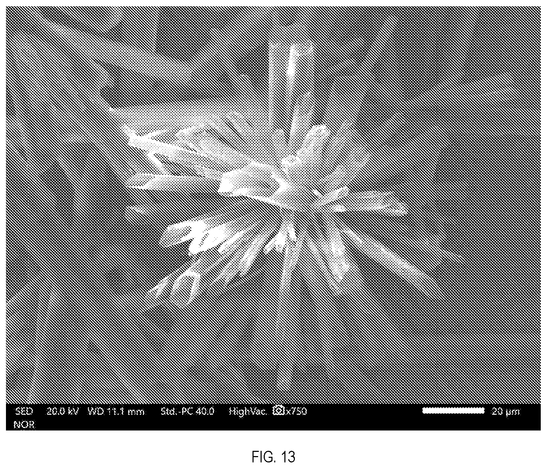

- Figure 13 refers to a microscopic image relating to the complete formation of the crystals of usnic acid and/or a salt thereof, after applying a finished product PF, according to the present invention, to a surface and the solvent, contained in said finished product PF, is evaporated from the surface;

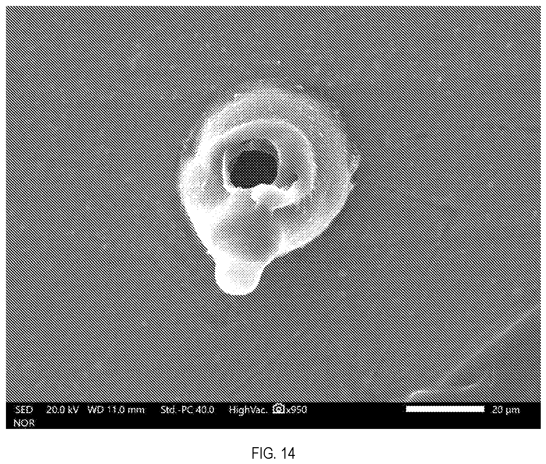

- Figure 14 refers to a microscopic image relating to the piercing action caused by the usnic acid crystal and/or a salt thereof against the cell wall of the bacterium present on the surface treated with a finished product PF, according to the present invention.

Therefore, forming an object of the present invention is an inclusion compound (ci) comprising or, alternatively, consisting of: (i) D-usnic acid as enantiomer, preferably as pure enantiomer, or a salt thereof, or mixtures thereof, and (ii) cyclodextrins. Said (i) D-usnic acid is of natural origin (not synthetic or product of synthesis) because it is extracted by means of a process, also subject of the present invention, starting from a natural material. Also said (ii) beta-cyclodextrins are of natural origin. As a result, also said inclusion compound (ci) is of natural origin. Said inclusion compound (ci) advantageously has an antiviral activity, preferably against the human coronavirus SARS-CoV-2 and a bacteriostatic or antibacterial activity both against Gram-positive and Gram-negative pathogenic bacteria. It should be observed that said inclusion compound (ci) shows an antiviral activity, which - combined with an antibacterial activity - allows to argue that said compound (ci) exerts a sanitising activity on the surfaces where it is applied.

In the present description, the expression "inclusion compound" refers to a chemical structure of the type similar to a chemical complex in which a chemical compound (*host*) may have cavities (for example, one or two or three cavities, preferably one) of certain dimensions, equal to or different from each other, in which there can be allocated or positioned or established molecules (for example one or two or three molecules, preferably one) having dimensions similar to those of the respective cavities, of a second chemical compound (*guest*), where the host and the guest are non-covalently bound, generally by means of intermolecular forces such as *van der Waals* forces. Cyclodextrins are natural cyclic oligosaccharides formed by 6, 7 or 8 D-(+)- glucopyranose monomers bound together with an $\alpha$1-4 glucosidic bond and ring-closed which have cavities (for example one or two cavities) of certain dimensions, identical or different from each other. The cyclodextrins (ii) of the present invention form a molecular cage delimiting a lipophilic cavity capable of hosting D-usnic acid as enantiomer, or salt thereof, or mixtures thereof (i) of the present invention.

Preferably, said cyclodextrins (ii) used in the inclusion compound (ci) are selected from the group comprising or, alternatively, consisting of $\alpha$-cyclodextrins, $\beta$-cyclodextrins, $\gamma$-cyclodextrins and mixtures thereof. More preferably, said cyclodextrins (ii) are beta-cyclodextrins.

In an embodiment, the (ii) cyclodextrins are selected from beta-cyclodextrins. The (ii) cyclodextrins comprise or, alternatively, consist of (2-hydroxypropyl)-$\beta$-cyclodextrin (CAS No 128446-35-5).

As a matter of fact, (2-hydroxypropyl)-$\beta$-cyclodextrin proved to be, together with others, advantageously a selective complexing agent of D-usnic acid, or a salt thereof, or mixtures thereof, from a racemic mixture (or racemate) of usnic acid, obtained from the process of the present invention.

Racemic usnic acid (CAS No. 125-46-2) is the bioactive secondary metabolite of lichens. The large-scale use of said usnic acid has always been limited due to the low solubility in water (0.06 mg/cm$^3$, at room temperature of 20°C and pressure of 1 atmosphere).

Therefore, the solubility of usnic acid in water has always represented, and still represents, a major limit to the use thereof. Furthermore, with regard to the efficacy of usnic acid (or of a relative salt thereof) in terms of anti-bacterial activity, the inventors of the present invention observed that it depends both on the (natural or synthetic) origin of usnic acid and on the type of isomer (levorotatory(-) and/or dextrorotatory(+)) used, as well as how said usnic acid is made available. It has been observed that the dextrorotatory form (+) of natural origin from *Usnea* is more stable, effective and active than the dextrorotatory form (+) of synthetic origin.

However, as mentioned above, the poor solubility of usnic acid in water could be a source of difficulty to be overcome even when usnic acid (for example, in D(+) form) is part of the mixture M, subject of the present invention, when the latter is then placed in contact with water or with a solution containing water. Whereas, being soluble in water the usnic acid salt, such as for example the usnic acid sodium salt, usually is not a source of difficulty when it is part of the mixture M, subject of the present invention.

After an intense and extensive research activity, the inventors of the present invention surprisingly found that the solubility in water of the enantiomer D of usnic acid, or salt thereof, or mixtures thereof (i) can be increased by various orders of magnitude (for example up to about 4.2 mg/cm$^3$, considering the same temperature of 20°C and pressure of 1 atmosphere) by forming the inclusion compound (ci).

As a result, in order to overcome the poor solubility of usnic acid when it is part of mixture M, usnic acid may be present in said mixture M as such or in the form of an inclusion compound (ci) and, the latter, also present in said mixture M in the presence of the usnic acid salt which is instead per se soluble in water, such as for example the usnic acid sodium salt. Therefore, it may be provided for that the mixture M may comprise or, alternatively, consist of (a) an usnic acid of natural origin and/or (b) a relative salt thereof, or (a) an usnic acid of natural origin where, however, the usnic acid is in the form of an inclusion compound (ci) and/or (b) an usnic acid salt, such as for example an usnic acid sodium salt. In this case even if the mixture M is in solid state at a temperature of 25°C when it is placed in contact with water, or with a composition containing water, the usnic acid is more soluble as well as stable, effective and active, especially when it is in the D(+) form.

As mentioned above, in the compound (ci) the lipophilic cavity of the cyclodextrins (host) hosts D-usnic acid, or salt thereof, or mixtures thereof (i) (guest), through a reversible non-covalent interaction. As a matter of fact, during the formation of the inclusion compound (ci), no covalent bond is formed, and no covalent bond is broken. The mechanism which - at least primarily - promotes the formation of the inclusion compound is the release of solvent molecules (preferably water molecules), a highly enthalpic exchange reaction, from the cyclodextrin cavity (ii). Thanks to this host/guest interaction (reversible electrostatic chemical binding), the inventors of the present invention surprisingly found that D-usnic acid, or a salt thereof or mixtures thereof (i) is not trapped/constrained or unable to perform its function in the inclusion compound but, on the contrary, it is easily released from the lipophilic cavity of its host, and therefore readily available to carry out its activity. Furthermore, the inclusion compound (ci) renders D-usnic acid (or a salt thereof) compatible in an aqueous solution or an aqueous dispersion or an aqueous suspension. When said aqueous solution or dispersion or suspension, containing said inclusion compound (ci), is applied manually - by spraying or mechanically - to a surface such as for example that of a wall or floor of a hospital or kindergarten or school room, said acid or a salt thereof contained in said inclusion compound (ci) is capable of being placed, adhering and coating said surface uniformly and homogeneously as if it were a coating varnish.

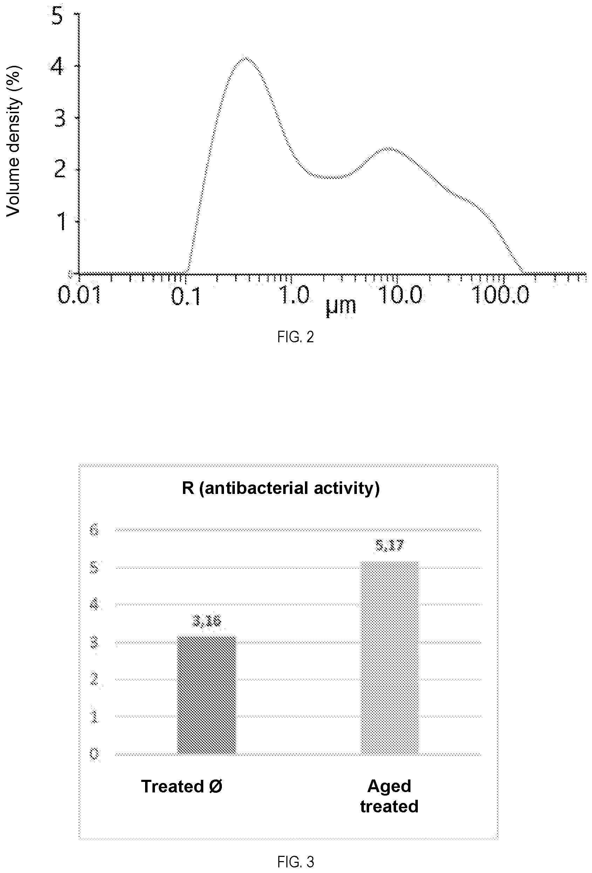

Said D-usnic acid as enantiomer (i), preferably as pure enantiomer, is of natural origin (not synthetic) and it could be associated, as chemical structure, with that of the corresponding synthesis compound having CAS No. 7562-61-0, that is the dextrorotatory enantiomer of said acid. The D-usnic acid as a pure enantiomer, subject of the present invention, has a light rotatory power (optical activity) comprised from 450 to 550, preferably from 475 to 525, and it is soluble in chloroform and ethyl acetate. Whereas it is moderately soluble in ethanol, and insoluble in water. Said D-usnic acid as a pure enantiomer has a melting point comprised from 192°C to 204°C, a flash point of 223°C and a boiling point of 605°C. Preferably, said D-usnic acid salt as pure enantiomer is a sodium salt. Said inclusion compound (ci) preferably comprises solid particles of D-usnic acid as pure enantiomer, or salt thereof, or mixtures thereof (i). More preferably, said solid particles have an average particle distribution comprised from 0.01 $\mu$m to 50 $\mu$m, preferably comprised from 0.1 $\mu$m to 30 $\mu$m, more preferably comprised from 0.15 $\mu$m to 20 $\mu$m, even more preferably comprised from 0.2 $\mu$m to 15 $\mu$m. Said average particle distribution was determined and measured using a laser diffraction method, according to the GB/T 19077-2016 standard, for example with a Malvern Mastersizer 3000 instrument. Said standard is meant in the version valid at the priority date of the present patent application. Preferably, said solid particles have an average particle distribution such that D10 = 0.236 $\mu$m, D50 = 1.570 $\mu$m, and D90 = 31.800 $\mu$m. In an embodiment of the present invention, said solid particles have a distribution according to the chart of figure 2. Said solid particles disperse in the aqueous phase of the liquid composition, to obtain an aqueous liquid dispersion of D-usnic acid as pure enantiomer.

D-usnic acid, or salt thereof or mixtures thereof (i) is advantageously a natural and non-synthetic D-usnic acid and it is preferably extracted from lichens. There are different methods for classifying lichens; one of these methods consists in examining the different forms of growth based on which we have:

- *Fruticose lichens.* The species of lichens belonging to this group are *Letharia vulpina,* or those belonging to the genus *Usnea*, otherwise known as beard lichen and of the genus *Ramalina.*
- *Leafy lichens.* This type of lichens includes those of the genus *Parmelia, Collema, Physcia, Physconia, Xanthoria.*
- *Crustose lichens.*
- *Gelatinous Lichens.*
- *Squamulose lichens.* Some lichens that can be found in this category are: *Catapyrenium psoromoides, Cladonia coniocraea, Cladonia bimbriata, Cladonia macilenta, Cladonia pyxidata, Normandina pulchella.* The lichens are preferably selected from the group comprising, or alternatively, consisting of *Usnea, Cladonia, Hypotrachyna, Lecanora, Ramalina, Evernia, Parmelia, Alectoria* and combinations thereof, more preferably from *Usnea*, even more preferably from *Usnea Longissima* Ach., by means of an extraction process subject of the present invention.

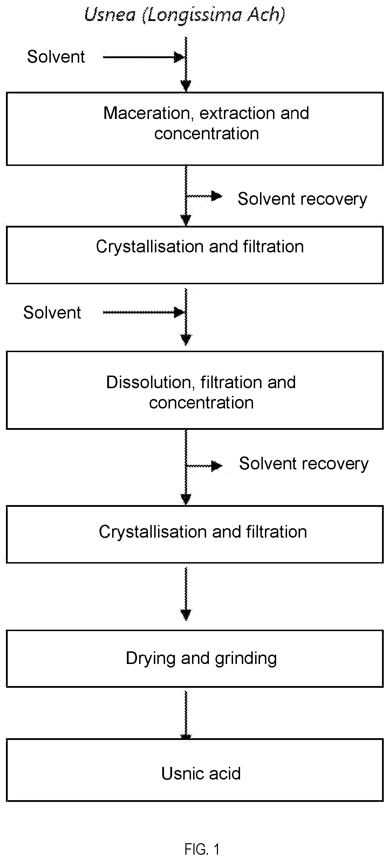

The attached figure 1 schematically shows a flow chart of an embodiment of a process, according to a possible embodiment thereof, to obtain the D-usnic acid of natural origin. According to such embodiment of the process, the usnic acid in dried form is obtained after the following steps:

(a.1) maceration and extraction from a plant material selected from a lichen preferably selected from the group comprising or, alternatively, consisting of *Usnea, Cladonia, Hypotrachyna, Lecanora, Ramalina, Evernia, Parmelia, Alectoria* and combinations thereof, more preferably of *Usnea,* even more preferably of *Usnea Longissima* Ach., with an organic solvent, preferably a solvent selected from the group comprising or, alternatively, consisting of benzene, hexane, acetone, chloroform, trichloroethylene, or an alcoholic solvent, even more preferably ethanol, to obtain an extraction solution, and concentration of said extraction solution to obtain a concentrated extraction solution and a residual solvent;

(a.2) crystallisation and filtration of the concentrated extraction solution, obtained from step (a.1), to obtain a crystallised and filtered extraction product;

(a.3) dissolution, filtration and concentration of the crystallised and filtered extraction product, obtained from step (a.2), to obtain a concentrated extract and a residual solvent;

(a.4) crystallisation, filtration, and subsequently drying and grinding, of the concentrated extract, obtained from step (a.3), to obtain a dry ground extract of usnic acid, preferably having a titre comprised from 80% to 99.9%, more preferably comprised from 90% to 99.5%, even more preferably comprised from 95% to 98%.

The maceration and extraction of step (a.1) is preferably carried out in an extraction tank, preferably made of stainless steel, provided with stirring and heating means. Preferably, in the maceration and extraction of step (a.1) a [weight of plant material]:[volume of organic solvent] ratio comprised from 10:1 to 1:50, preferably comprised from 5:1 to 1:40, even more preferably comprised from 1:1 to 1:35, is used. The maceration and extraction of step (a.1) are preferably carried out at ambient pressure, and at a temperature comprised from 10°C to 80°C, preferably comprised from 20°C to 70°C, even more preferably comprised from 25°C to 60°C.

The concentration of step (a.1) is preferably carried out in a concentrator (or evaporator), more preferably of the single-acting type, even more preferably made of stainless steel.

In step (a.1) the thallus (sprout or scion) of *Usnea* (*Longissima Ach.*) is used together with the ethyl acetate solvent, for example in an amount of, for example, 350 Kg of plant part and 2600 litres of solvent. The maceration is preferably carried out at a temperature of about 25°C and pressure of 1 atmosphere for a period of time comprised from 2 hours to 10 hours, preferably from 4 hours to 8 hours, for example from 5 hours to 6 hours. The maceration can be carried out in a reactor provided with means for stirring, heating and recycling liquids. Basically, maceration is carried out by continuously recirculating the distillate (solvent) on the plant part. The extraction, carried out as a single step, is carried out at a temperature of about 25°C and pressure of 1 atmosphere. The concentration of the extraction solvent used, containing the usnic acid extracted from the plant part, is carried out considering the boiling temperature of ethyl acetate which is about 77.1°C, possibly also acting on the extraction pressure. A dense concentrated liquid and solvent recovery, almost completely, are obtained.

In the crystallisation and filtration of step (a.2), subsequent to step (a.1), to obtain the crystallised and filtered extraction product, an organic solvent selected from the group comprising or, alternatively, consisting of benzene, hexane, acetone, chloroform, trichloroethylene, or an alcoholic solvent, even more preferably ethanol, is preferably used. In the crystallisation and filtration of step (a.2) a [concentrated extraction solution]:[organic solvent] by volume ratio comprised from 10:1 to 1:40, preferably comprised from 5:1 to 1:30, even more preferably comprised from 1:1 to 1:20, is preferably used. In the crystallisation of step (a.2), the concentrated extraction solution obtained from step (a.1) is preferably cooled to facilitate crystallisation, more preferably at a temperature comprised from 1°C to 20°C at ambient pressure, even more preferably comprised from 5°C to 15°C at ambient pressure. At the end of step (a.2) a crystal material with a purity of at least 80%, from 85% to 90% and in an amount of about 20 Kg, if starting from about 350 Kg of plant part is obtained.

In step (a.3), subsequent to step (a.2), the crystallised and filtered extraction product obtained from step (a.2) is dissolved, filtered and concentrated to obtain a concentrated extract and the residual solvent. In step (a.3) an organic solvent, more preferably selected from the group comprising, or alternatively, consisting of benzene, hexane, acetone, chloroform, trichloroethylene, or an alcoholic solvent, even more preferably ethanol, is preferably used. In the dissolution of step (a.3) a [crystallised and filtered extraction product weight]:[organic solvent volume] ratio comprised from 10:1 to 1:40, preferably comprised from 5:1 to 1:30, even more preferably comprised from 1:1 to 1:20, is preferably used. In step (a.3) they are dissolved in chloroform 2x20 Kg to obtain 20 Kg with a minimum purity of 98% of usnic acid.

In step (a.4) subsequent to step (a.3), the concentrated extract obtained from step (a.3) is crystallised, filtered, and subsequently dried and ground, to obtain the dry ground extract of usnic acid. In crystallisation of step (a.4) an organic solvent, more preferably selected from the group comprising, or alternatively, consisting of benzene, hexane, acetone, chloroform, trichloroethylene, or an alcoholic solvent, even more preferably ethanol, is preferably used. In the crystallisation of step (a.4) a [concentrated extract weight]: [organic solvent volume] ratio comprised from 10:1 to 1:40, preferably comprised from 5:1 to 1:30, even more preferably comprised from 1:1 to 1:20, is preferably used. In the crystallisation of step (a.4), the concentrated extract obtained from step (a.3) is preferably cooled to facilitate crystallisation, more preferably at a temperature comprised from 1°C to 20°C at ambient pressure, even more preferably comprised from 5°C to 15°C at ambient pressure. The drying of step (a.4) is preferably carried out up to a residual solvent content comprised from 0.5% to 10% by weight, preferably comprised from 1% to 5% by weight, even more preferably comprised from 1.5% to 3% by weight, with respect to the total weight of the dry extract of usnic acid. Preferably, the grinding of step (a.4) is carried out by means of a mill, more preferably a rotary ball mill. The drying of the filtered and crystallised solid obtained from step (a.4) is complete when a residual solvent content equal to about 2%-5% by weight remains, with respect to the initial weight. A plate dryer (without pressure vacuum) is used at a temperature of about 95°C-99°C with air circulation. The ground solid has an average particle size distribution comprised from 20 mesh to 40 mesh and it contains 98% by weight usnic acid (HPLC with Sigma Aldrich method). Starting from 2x350 Kg of plant part at the beginning of the process (starting material), about 3%-4% yield of material (dry solid) is obtained at the end of the process, which is equivalent to about 14 Kg-28 Kg of usnic acid with a content of 98% by weight (13.72 Kg-27.44 Kg). The obtained usnic acid is in the D(+) form 99.9% pure usnic acid, or as racemate.

After obtaining the dry ground extract of usnic acid (step (a.4)) as racemic mixture, said dry extract is selectively complexed with cyclodextrins, preferably beta-cyclodextrins, to obtain said inclusion compound (ci). Preferably, said selective complexation is obtained by means of a co-precipitation of D-usnic acid, or salt thereof, or mixtures thereof (i) and cyclodextrins (ii). The inclusion compound (ci) is preferably obtained by means of a co-precipitation of D-usnic acid, or salt thereof, or mixtures thereof (i) and cyclodextrins (ii), preferably beta-cyclodextrins. More precisely, the cyclodextrins (ii) are initially dissolved in water or other suitable aqueous solvent, and subsequently the dry ground extract of usnic acid of step (a.4) is added, while the aqueous solution containing the cyclodextrins (ii) is kept under stirring. In the presence of a sufficiently high concentration of cyclodextrins (ii) in solution, precipitation of the inclusion compound (ci) will begin as the complexation reaction of D-usnic acid, or salt thereof, or mixtures thereof (i) by cyclodextrins (ii) progressively proceeds. Preferably, the solution containing the inclusion compounds (ci) may have to be cooled to a temperature comprised from 1°C to 18°C, preferably under stirring, in order to initiate precipitation. The inclusion compounds (ci) may be collected through decantation, centrifugation or filtration. The inclusion compound (ci) is preferably a water-soluble clathrate or a water-suspendable clathrate, wherein said D-usnic acid as pure enantiomer, or salt thereof, or mixtures thereof (i) is hosted in a cavity of said clathrate, once said D-usnic acid, or salt thereof, or mixtures thereof (i) is contacted with said cyclodextrins (ii). D-usnic acid, or salt thereof, or mixtures thereof (i) and cyclodextrins (ii), preferably beta-cyclodextrins, are present in the inclusion compound (ci) preferably in a (usnic:beta-cyclodextrin) by weight ratio comprised from 3:1 to 1:3, preferably in a by weight ratio comprised from 2:1 to 1:2, more preferably comprised from 1.5:1 to 1:1.5, even more preferably being 1:1; 1:1.1; 1:1.2; 1:1.3; 1:1.4. Should (2-hydroxypropyl)-β-cyclodextrin be used, the by weight ratio with D-usnic acid is 1:1. The inclusion compound (ci) is preferably used as an antibacterial or bacteriostatic agent both against Gram-negative and Gram-positive pathogenic bacteria, preferably Gram-negative bacteria, for which said inclusion compound (ci) has proved particularly effective. Said inclusion compound (ci) advantageously has an antiviral activity, preferably against the human coronavirus SARS-CoV-2 and a bacteriostatic or antibacterial activity both against Gram-positive and Gram-negative pathogenic bacteria. It should be observed that said inclusion compound (ci) shows an antiviral activity, which - combined with an antibacterial activity - allows to argue that said compound (ci) exerts a sanitising activity on the surfaces where it is applied.

Preferably, Gram-negative bacteria in relation to which the inclusion compound (ci) performs an antibacterial or bacteriostatic function are selected from the group comprising or, alternatively, consisting of: *Escherichia Coli, Klebsiella, Acinetobacter baumannii,* and combinations thereof. Preferably, Gram-positive bacteria in relation to which the inclusion compound (ci) performs an antibacterial or bacteriostatic function are selected from the group comprising or, alternatively, consisting of: *Staphylococcus aureus, Methicillin-resistant Staphylococcus aureus* (MRSA), *Enterococcus,* Vancomycin resistant enterococcus (VRE), *Actinobacter, Actinobacter spp., Clostridium difficile,* and combinations thereof. Preferably, in such use, said inclusion compound (ci) is added in the process for preparing a product in the form of a plastic film or layer, thermoplastic resin or polymer, polyethylene (PE), polyvinyl chloride (PVC), polyethylene terephthalate (PET,) latex; or said inclusion compound (ci) is spread or positioned on the surface of said product in an amount comprised from 0.1% to 20% by weight, with respect to the weight of the product.

Furthermore, forming an object of the present invention is a liquid composition comprising or, alternatively, consisting of:

(a) said inclusion compound (ci);
(b) an acrylic resin, a polyurethane resin, an acryl-polyurethane resin, or mixtures thereof;
(c) optionally, a pigment or an opacifying agent;
(d) water.

Said liquid composition has a bacteriostatic or antibacterial activity both against Gram-positive and Gram-negative pathogenic bacteria, such as for example those having the scientific name *Klebsiella, Enterobatteriacee, Enterobacter, Pseudomonas* and *Escherichia.* Said liquid composition may be in the form of an aqueous solution or an aqueous dispersion or an aqueous suspension or an aqueous emulsion. Said liquid composition advantageously has an antiviral activity, preferably against the human coronavirus SARS-CoV-2 and a bacteriostatic or antibacterial activity both against Gram-positive and Gram-negative pathogenic bacteria. It should be observed that said liquid composition shows an antiviral activity, which - combined with an antibacterial activity - allows to argue that said liquid composition exerts a sanitising activity on the surfaces where it is applied.

The acrylic resin (b), used in conjunction with (a) said inclusion compound (ci) in said composition, preferably comprises monomers selected from the group comprising or, alternatively, consisting of acrylic acid, acrylic acid ester, methacrylic acid, methacrylic acid ester, styrene, vinyltoluene, vinyl acetate, vinyl ester of carboxylic acids higher than acetic acid, acrylonitrile, acrylamide, butadiene, ethylene, vinyl chloride, and mixtures thereof. More preferably, the acrylic resin (b) comprises or, alternatively, consists of a methacrylic acid-styrene copolymer.

The optional pigment or opacifying agent (c), present in said liquid composition together with the inclusion compound (ci) and the acrylic resin (b), is preferably selected from the group consisting of iron oxides, titanium oxides, cobalt-based dyes, phthalates, azoic dyes, and mixtures thereof. Preferably, said pigment or opacifying agent comprises or, alternatively, consists of titanium dioxide.

The water (d), present in said liquid composition together with the inclusion compound (ci), the acrylic resin (b) or a polyurethane resin or an acryl-polyurethane resin or mixtures thereof; and the optional pigment or opacifying agent (c), has no particular limitations. Preferably, water (d) is mains water, purified water, or deionised water.

Said liquid composition preferably comprises:

(a) the inclusion compound (ci) in an amount comprised from 0.1% to 15% by weight, preferably comprised from 0.2% to 10% by weight, even more preferably comprised from 0.3% to 7% by weight, with respect to the total weight of said liquid composition;

(b) said acrylic resin, said polyurethane resin or said acryl-polyurethane resin or mixtures thereof, in an amount comprised from 1% to 80% by weight, preferably comprised from 2% to 75% by weight, even more preferably comprised from 5% to 70% by weight, with respect to the total weight of said liquid composition;

(c) optionally, said pigment or said opacifying agent in an amount comprised from 10% to 40%, preferably comprised from 15% to 35% by weight, even more preferably comprised from 20% to 30% by weight, with respect to the total weight of said liquid composition;

(d) water in an amount comprised from 1% to 40%, preferably comprised from 2% to 30% by weight, even more preferably comprised from 3% to 22% by weight, with respect to the total weight of said liquid composition.

Forming an object of the present invention is a use of said liquid composition as varnish or architectural coating preferably as masonry wall coating or varnish or for walls and floors, for example for linoleum floors, more preferably as antibacterial or bacteriostatic architectural coating both for Gram-negative and Gram-positive pathogenic bacteria.

Forming an object of the present invention is a use of said liquid composition as a varnish or architectural coating of surfaces and walls, preferably as an antiviral architectural coating, preferably against the human coronavirus SARS-CoV-2, preferably against the human coronavirus SARS-CoV-2.

Lastly, forming an object of the present invention is a use of cyclodextrins, preferably of beta-cyclodextrins, more preferably of (2-hydroxypropyl)-β-cyclodextrin, as selective complexing agent /s of D-usnic acid, or a salt thereof, or mixtures thereof (i), from a racemic mixture (or racemate) of usnic acid of natural origin.

Examples of surfaces where the mixtures or products of the present invention can be applied are horizontal or vertical surfaces, for example floors, walls or ceilings for example made of concrete, lime or plasterboard, linoleum, or polyvinyl chloride (PVC), polyamide (PA), polyethylene (PE), polyester (PES) or polyethylene terephthalate (PTF). This type of surfaces, without limitation, can for example be found in a medical clinic, emergency department, hospital, dental clinic, playground, kindergarten, school or washrooms and toilet facilities for example present in public or private facilities, or for example in supermarkets and shopping malls or playgrounds.

Forming an object of the present invention is a mixture M comprising or, alternatively, consisting of (a) an usnic acid of natural origin and/or (b) a relative salt thereof.

Said (a) an usnic acid of natural origin, contained in said mixture M, is a C/A combination or association between a dextrorotatory natural usnic acid D(+) and a levorotatory natural usnic acid L(-).

In the context of the present invention, the term "combination" is for example used to indicate that the dextrorotatory natural usnic acid D(+) and the levorotatory natural usnic acid L(-) are together, simultaneously present in contact with each other, before the use thereof, while in the context of the present invention the term "association" is used to indicate that, for example, the dextrorotatory natural usnic acid D(+) and the levorotatory natural usnic acid L(-) are separated from each other, before the use thereof, and they can be contacted with each other, at the time of use thereof. The present meaning of "combination" and "association" between substances is also applicable for example to the usnic acid salt, as well as to other substances or compounds used in the present invention.

The expression "natural" or "of natural origin" or "natural usnic acid or usnic acid salt or of natural origin" is used to indicate that said usnic acid or usnic acid salt is obtained from a plant, in particular from a plant of the family *Usneaceae,* genus *Usnea.*

Preferably, the dextrorotatory form D(+), in said (a) an usnic acid of natural origin, is present in an amount comprised from 0.1% to 99.9% by weight, with respect to the total weight of the C/A combination or association, whereas the levorotatory form L(-), in said (a) an usnic acid of natural origin, it is present in an amount comprised from 99.9% to 0.1% by weight, with respect to the total weight of the C/A combination or association. For example, usnic acid can be present as racemate 50% (+) and 50% (-), or for example as 100% of dextrorotatory form D(+).

Said (b) an usnic acid salt, contained in said mixture M, is a salt of an alkaline or alkaline-earth metal. Preferably, said (b) an usnic acid salt is a salt of the dextrorotatory form D(+) of usnic acid and which can be present in an amount by weight comprised from 0.1% to 99.9% by weight, with respect to the total weight of the C/A combination or association, and the levorotatory form L(-) which can be present in an amount by weight comprised from 99.9% to 0.1% by weight, with respect to the total weight of the C/A combination or association. For example, the usnic acid salt, preferably the usnic acid sodium salt, can be present as racemate 50% (+) and 50% (-), or for example as dextrorotatory usnic acid sodium salt D(+). Said (a) an usnic acid of natural origin and said (b) a relative salt thereof are present, in said mixture M, in a by weight ratio comprised from 1:10 to 10:1, preferably from 1:5 to 5:1, even more preferably from 1:3 to 3:1; for example, 3:1, 2,5:1, 2:1, 1,5:1, or 1:1.

Said mixture M may be in solid or semi-solid state, in dispersed or suspended form, in form of a cream or paste or gel, or in liquid state; preferably said mixture M can be in the form of flakes, granules, powders, pellets, or it can be an aqueous or hydroalcoholic solution or, in organic solvents. Said (a) an usnic acid of natural origin and/or said (b) a relative salt thereof are in solid form of powder with an average particle size comprised from 1 micron to 100 microns, preferably from 5 microns to 50 microns, even more preferably from 10 microns to 20 microns.

The usnic acid can be represented, for example, as follows: (+)-Usnic acid 2,6-Diacetyl-7,9-dihydroxy-8,9-dimethyldibenzo[b,d]furan-1,3(2H,9bH)-dione; (+)-Usnic acid from *Usnea*; CAS: 7562-61-0, EC: 231-456-0. The usnic acid sodium salt can be represented, for example, as follows: 2,6-diacetyl-7,9-dihydroxy-8,9b-dimethyldibenzofuran-1,3(2H,9bH)-dione monosodium salt; CAS: 34769-44-3, EC: 252-204-6. The purity of said (a) an usnic acid and/or of said (b) an usnic acid salt is comprised from 95% to 99.9%, preferably from 96% to 99.5%, even more preferably from 97% a 98%, for example 98%.

Forming an object of the present invention is a semi-finished product PS, preferably in the form of a semisolid cream or paste, comprising said mixture M or an inclusion compound (ci), and a resin.

Said mixture M comprises or, alternatively, consists of said (a) an usnic acid of natural origin and/ said or (b) a relative salt thereof. As mentioned above, in order to overcome the problems relating to the poor solubility of usnic acid in water, said usnic acid may be present, in said mixture M, also in the form of inclusion compound (ci). Whereas, given that it is soluble, usnic acid salt, if present, will be present as such, such as for example the usnic acid sodium salt.

Preferably, said mixture M or said inclusion compound (ci) are present, in said semi-finished product PS, in an amount % by weight comprised from 20% to 80%, preferably from 35% to 65%, even more preferably from 40% to 50%, for example 41%, 42%, 43%, 44%, 45%, 46%, 47%, 48% or 49%, with respect to the total weight of said semi-finished product PS.

In an embodiment said mixture M, contained in the semi-finished product PS, comprises said (a) an usnic acid alone. As mentioned above, in order to overcome the problems relating to the poor solubility of usnic acid in water, said usnic acid may be present, in said mixture M, also in the form of inclusion compound (ci).

In this case, said (a) an usnic acid is present in said semi-finished product PS in an amount by weight comprised from 20% to 80%, preferably from 35% to 65%, even more preferably from 40% to 50%, for example 41%, 42%, 43%, 44%, 45%, 46%, 47%, 48% or 49%, with respect to the total weight of said semi-finished product PS.

In another embodiment, said mixture M, contained in the semi-finished product PS, comprises both said (a) an usnic acid and said (b) a relative salt thereof, preferably a sodium salt. As mentioned above, in order to overcome the problems relating to the poor solubility of usnic acid in water, said usnic acid may be present, in said mixture M, also in the form of inclusion compound (ci).

In this case, said usnic acid is present in said semi-finished product PS in an amount by weight comprised from 10% to 60%, preferably from 20% to 50%, even more preferably from 30% to 40%, for example 24%, or 32%, with respect to the total weight of said semi-finished product PS. Whereas said (b) usnic acid salt is present in said semi-finished product PS in an amount by weight comprised from 5% to 50%, preferably from 10% to 40%, even more preferably from 15% to 30%, for example 16%, 18%, 20%, 22%, 24%, 26% or 28%, with respect to the total weight of said semi-finished product PS.

Said resin is present, together with the mixture M and/or said inclusion compound (ci), in said semi-finished product PS in an amount % by weight comprised from 20% to 70%, preferably from 30% to 60%, even more preferably from 35% to 50%, for example 38%, 40%, 42% or 45%, with respect to the total weight of said semi-finished product PS.

Besides the mixture M and/or an inclusion compound (ci) and the resin, the semi-finished product PS may preferably further comprise (i) water in an amount by weight comprised from 5% to 30%, preferably from 10% to 20%, for example 15%, with respect to the total weight of the semi-finished product PS; (ii) additives, preservatives and a glycol, such as for example a propylene glycol or a diethylene glycol, in an amount by weight comprised from 0.5% to 5%, preferably from 1% to 1.5%, for example 2%, with respect to the total weight of the semi-finished product PS.

Besides said mixture M and/or an inclusion compound (ci) and said resin, the semi-finished product PS may preferably further contain a preservative, for example, as a mixture of two preservatives, 5-chloro-2-methyl-2H-isothiazol-3-one [EC no. 247-500-7] and 2-methyl-2H-isothiazole-3-one [EC no. 220-239-6] at a by weight ratio 3:1, Index Number: 613-167-00-5 and CAS: 55965-84-9.

Preferred embodiments of a semi-finished product PS (also referred to as NPS) of the present invention are reported in Table 1.

Table 1

|  | PS1 | PS2 | PS3 | PS4 | PS5 | PS6 | PS7 |
|---|---|---|---|---|---|---|---|
| Usnic acid of natural origin, racemate or D(+) | 40% | 48% | 32% | 30% | 24% | 24% | 48% |
| Usnic acid salt of natural origin, racemate or D(+) | 0 | 0 | 16% | 18% | 24% | 24% | 0 |
| Resin | 48% | 40% | 40% | 36% | 42% | 52% | 52% |
| Water | 10% | 10% | 9% | 12% | 8% | 0 | 0 |
| Additives+Glycol | 2% | 2% | 3% | 4% | 2% | 0 | 0 |

The resins are selected from the group comprising or, alternatively, consisting of polyurethanes, urethanes, polyacrylics, acrylics, polyvinyls, vinyls, polyamides or amides known to the person skilled in the art.

Preferred embodiments of a semi-finished product PS (also referred to as NPS) of the present invention are reported below in Table 21:

Table 21

| PS (NPS) | % weight | % weight |
|---|---|---|
| usnic acid | 10-30 | 18 |
| usnic sodium salt | 10-30 | 18 |
| beta-cyclodextrins | 15-40 | 25 |
| acrylic resin | 3.9-20 | 10 |
| distilled water | 10-60 | 25 |
| additives | 1-8 | 3.5 |
| butyldiglycol | 0.1-1.5 | 0.5 |

Forming an object of the present invention is a finished product PF comprising said semi-finished product PS, and a paint product.

Said semi-finished product PS, contained in said finished product PF, is present in an amount by weight comprised from 0.1% to 10%; preferably from 0.5% to 8%; even more preferably from 1% to 6%, for example 1%, 2%, 3%, 4%, or 5%, with respect to the weight of the paint product.

In an embodiment, said paint product may be present in said finished product PF, together with said semi-finished product PS, preferably in form of liquid, dispersion or aqueous dispersion.

In an embodiment, said paint product may be preferably selected from the group comprising or, alternatively, consisting of varnishes, enamels or paints or water-soluble paints; preferably said varnishes, enamels or paints, for outdoor or indoor surfaces, are preferably selected from water-based or organic solvent based ones. For example, a water-soluble paint may be used for outdoor or indoor surfaces.

In an embodiment, said water-based paint product may preferably be selected from compatible one-component or two-component ones for indoor or outdoor surfaces made of masonry wall, linoleum or wood for spray, brush or roller-type application.

In another embodiment, said organic solvent-based paint product may preferably be selected from acrylic and/or methacrylic and/or urethane and/or polyurethane-based two-component ones for indoor or outdoor surfaces, for example surfaces made of glass, aluminium, steel, plastic, polymer, linoleum, fabric, natural leather, synthetic leather, wood, natural fabric, artificial fabric or synthetic fabric for spray or roller or brush-type application.

The finished product PF of the present invention may be seen as a fluid solution with a polymer matrix and a solute (dextrorotatory usnic acid and/or a salt thereof, such as a sodium salt). In the light of the above, paint products may be deemed to include water and solvent-based paints, varnishes and enamels. Varnishes for example to obtain a transparent film. Furthermore, taking into account that paints, varnishes and enamels have many applications, raw materials for example solvents, polymer matrices (resins), additives and pigments/fillers that are most common and widely used in the field of professional use varnishes, paints and enamels are reported below. In the case of varnishes, for example transparent, they may be considered as solutions; whereas when the various components are dispersed - not dissolved - they are considered to be dispersions.

List of solvents most commonly used for the preparation of varnishes (transparent), enamels (coloured) and paints (building products): water, butyl alcohol, isopropyl alcohol, ethyl acetate, n-butyl acetate, isobutyl acetate, toluene, xylol, naphtha solvent, mineral spirits, acetone, methyl ethyl ketone, methyl isobutyl ketone, butyl glycol, dibutyl glycol, glycol ethers, methoxy propyl acetate.

List of the most common polymer matrices: usually the resins are found in solvent solution or in aqueous emulsion. The polymer matrices are dissolved in the solvents and in emulsion/dispersion in water where they do not dissolve. For example, synthetic or vegetable oils, vegetable fatty acids, castor, saturated or unsaturated fatty acids.

Though until now we have seen the categories of components that make up varnishes (which deposit a more or less glossy transparent film on the manufactured article), pigments and fillers and dyes in specific cases must be added as pertains to paints (resinous polymer powder) and enamels (rich with resin). Then there are the functional components. Fillers characterise the paints and backgrounds, pigments enamels. For example, fillers may include: calcium carbonate, mica, talc, barium sulphate, quartz; functional pigments such as for example: zinc phosphate, iron oxide; anticorrosive pigments: aluminium paste form; pigments: titanium dioxide, iron oxides, organic pigments yellow, orange, red, green, blue, magenta violet; effect pigments (optical interference).

In an embodiment, the finished product PF for example for applications on natural or synthetic leather or hide may be added to a base (paint product) for having the following composition: (i) water in an amount by weight comprised from 75% to 85%, preferably from 78% to 80%; (ii) $SiO_2$ in an amount by weight comprised from 1% to 8%, preferably from 2% to 5%; (iii) di(propylene glycol) methyl ether in an amount by weight comprised from 0.5% to 5%, preferably from 1% to 2%; (iv) siloxanes and silicones in an amount by weight comprised from 2% to 5%, preferably from 2.5% to 3.5%; and (v) polymers in an amount by weight comprised from 10% to 20%, preferably from 16% to 18%. In this case there can also be used a cross-linking agent for a cross-linking to obtain a film with characteristics such to resist abrasion tests, such as the Taber test, rubbing against alcohol and gasoline. As regards fabrics, for example a non-woven fabric (NWF) made of polypropylene or polyester, the following solution (finished product) containing 100 parts by weight of demineralised water, 0.6 parts by weight of racemic usnic acid, or the dextrorotatory form D(+) and 0.9 parts by weight of beta-cyclodextrins may be used.

In another embodiment, the finished product PF for applications, for example, on walls or ceilings and surfaces (horizontal and vertical) made of concrete or plasterboard, linoleum or wood, may be added to a base (paint product - opaque transparent one and two-component water-finish background) having for example the following composition: (i) resin (as part of the paint product) in an amount by weight comprised from 60% to 80%, preferably 70%, for example 72%; (ii) inert additives in an amount by weight comprised from 2% to 10%, preferably from 3.5% a 8%, for example 6.5%; (iii) water in an amount by weight comprised from 10% to 30%, preferably from 15% to 25%, for example 17%; (iv) di(propylene glycol) methyl ether in an amount by weight comprised from 0.5% to 5%, preferably from 1% to 3%, for example 2%; (v) diethylene glycol in an amount by weight comprised from 1% to 4%, preferably from 1.5% to 3%, for example 2.5%. This base is for applications for example for surfaces made of wood or parquet, also for outdoor surfaces. This base has excellent surface hardness, abrasion resistance, chemical strength and UV resistance. In order to further increase the chemical strength thereof, there may for example be added an amount by weight comprised from 3% to 15%, preferably 10%, with respect to the total weight of the finished product PF, of a catalyst for example comprising an amount by weight comprised from 70% to 90%, preferably 80% of a polyisocyanate resin and an amount by weight comprised from 10% to 30%, preferably 20% of a propylene carbonate, with respect to the total weight of the catalyst. This finished product PF may be applied by means of spray, roller or brush technique.

In another embodiment, the finished product PF for example for applications on glass, aluminium or steel may be added to a base (paint product - acrylic two-component transparent glossy varnish) for example having the following composition: (i) acrylic resin in an amount by weight comprised from 60% to 85%, preferably from 70% to 80%, for example 75%; (ii) xylol in an amount by weight comprised from 10% to 30%, preferably from 15% to 25%, for example 20%; (iii) additives in an amount by weight comprised from 0.5% to 4%, preferably from 1% to 3%, for example 2%. This base is capable of giving a highly durable and resistant coating with high light resistance and therefore suitable for outdoor and indoor applications. In order to further increase the chemical strength of the finished product PF, when it is applied on glass, there may for example be added an amount by weight comprised from 1% to 10%, preferably from 3% to 5% with respect to the total weight of the finished product PF of a catalyst comprising an aliphatic polyisocyanate resin in an amount by weight comprised from 30% to 50%, preferably from 35% to 45%, for example 40%; xylol in an amount by weight comprised from 20% to 40%, preferably from 25% to 35%, for example 30%; methyl ethyl ketone in an amount by weight comprised from 20% to 40%, preferably from 25% to 35%, for example 30%, with respect to the total weight of the formulation. This finished product PF may be applied by means of spray technique.

A preferred embodiment of the semi-finished or semi-processed product PS (referred to as NPS) and of the finished product PF (referred to as HS 360) is reported in Table 20.

Advantageously, the semi-finished product PS and the finished product PF, referred to as NPS and HS 360, respectively, in an embodiment reported in Table 20, simultaneously show an antibacterial and an antiviral activity, these two activities shown together allow to state that the finished product subject of the present invention is a sanitiser because it has successfully passed the sanitising procedure (N.° IPC-VAL-08) according to the regulation in force.

Advantageously, besides showing good mechanical resistance to abrasion and scratch with respect to the surfaces where they are applied, the semi-finished product PS and the finished product PF - referred to as NPS and HS 360, respectively, in an embodiment reported in Table 20 - show to be universal products ready for use on all surfaces and show good stability properties when the surfaces on which they are used are subjected to high light, temperature and humidity conditions.

Preferred embodiments FPn of the present invention are reported below.

FP1. An inclusion compound (ci) comprising or, alternatively, consisting of: (i) a D-usnic acid as an enantiomer, or a salt thereof, or mixtures thereof, of natural origin, and (ii) beta-cyclodextrins.

FP2. The inclusion compound (ci) according to FP1, wherein D-usnic acid, or a salt thereof, or mixtures thereof (i) and beta-cyclodextrins (ii), preferably (2-hydroxypropyl)-$\beta$-cyclodextrin, are present in said inclusion compound (ci) in a by weight ratio comprised from 3:1 to 1:3, preferably comprised from 2:1 to 1:2, more preferably comprised from 1.5:1 to 1:1.5, even more preferably being 1:1.

FP3. The inclusion compound (ci) according to FP1 or FP2, wherein D-usnic acid, or a salt thereof, or mixtures thereof (i) is extracted from lichens, preferably selected from the group comprising or, alternatively, consisting of *Usnea, Cladonia, Hypotrachyna, Lecanora, Ramalina, Evernia, Parmelia, Alectoria* and combinations thereof, more preferably from *Usnea*, even more preferably from *Usnea Longissima* Ach., and wherein said cyclodextrins (ii) comprise or, alternatively consist of beta-cyclodextrins, preferably it is (2-hydroxypropyl)-$\beta$-cyclodextrin, at a 1:1 ratio.

FP4. The inclusion compound (ci) according to any one of FP1-FP3, wherein said inclusion compound (ci) comprises solid particles of D-usnic acid as a pure enantiomer, or salt thereof, or mixtures thereof (i), wherein said solid particles have an average particle size distribution comprised from 0.01 $\mu$m to 50 $\mu$m, preferably comprised from 0.1 $\mu$m to 30 $\mu$m, more preferably comprised from 0.15 $\mu$m to 20 $\mu$m, even more preferably comprised from 0.2 $\mu$m to 15 $\mu$m.

FP5. Use of an inclusion compound (ci) according to any one of FP1-FP4 as an antibacterial or bacteriostatic agent both against Gram-negative and Gram-positive bacteria; wherein said bacteria are preferably selected from the group comprising or, alternatively, consisting of: *Escherichia Coli, Klebsiella, Acinetobacter baumannii, Staphylococcus aureus, Methicillin resistant staphylococcus aureus* (MRSA), *Enterococcus, Enterococcus spp. vancomycin resistant enterococci* (VRE), *Actinobacter, Actinobacter spp., Clostridium difficile,* and combinations thereof.

FP6. Use according to FP5, wherein said inclusion compound (ci) is added in the process for preparing a manufactured article in the form of a film or layer made of plastic, resin or thermoplastic polymer, polyethylene (PE), polyvinyl chloride (PVC), polyethylene terephthalate (PET), latex; or said inclusion compound (ci) is spread or positioned on the surface of said manufactured article in an amount comprised from 0.1% to 20% by weight, with respect to the weight of the manufactured article.

FP7. A liquid composition comprising or, alternatively, consisting of:

(a) an inclusion compound (ci) according to any one of claims 1-4;
(b) an acrylic resin, a polyurethane resin, an acryl-polyurethane resin, or the mixtures thereof;
(c) optionally a pigment or an opacifying agent;
(d) water.

FP8. The liquid composition according to FP7, comprising or, alternatively, consisting of:

(a) the inclusion compound (ci) in an amount comprised from 0.1% to 15% by weight, preferably comprised from 0.2% to 10% by weight, even more preferably comprised from 0.3% to 7% by weight, with respect to the total weight of said liquid composition;
(b) said acrylic resin, said polyurethane resin, said acryl-polyurethane resin or mixtures thereof, in an amount comprised from 1% to 80% by weight, preferably comprised from 2% to 75% by weight, even more preferably comprised from 5% to 70% by weight, with respect to the total weight of said liquid composition;
(c) optionally, said pigment or said opacifying agent in an amount comprised from 10% to 40%, preferably comprised from 15% to 35% by weight, even more preferably comprised from 20% to 30% by weight, with respect to the total weight of said liquid composition;

(d) water in an amount comprised from 1% to 40%, preferably comprised from 2% to 30% by weight, even more preferably comprised from 3% to 22% by weight, with respect to the total weight of said liquid composition.

FP9. Use of the liquid composition according to any one of FP7-FP8 as varnish or architectural coating, preferably as a masonry wall coating or varnish or for walls and floors, for example for linoleum floors, more preferably as an antibacterial or bacteriostatic architectural coating against Gram-negative bacteria and against Gram-positive bacteria.

FP10. Use of beta-cyclodextrins, preferably of (2-hydroxypropyl)-β-cyclodextrin, as selective complexing agent of D-usnic acid as pure enantiomer, or salt thereof, or mixtures thereof (i), from a racemic mixture (or racemate) of usnic acid of natural origin.

Further embodiments FRns of the present invention are reported below.

FR1. A semi-finished product PS comprising a mixture M, and a resin;

- wherein said mixture M comprises or, alternatively, consists of (a) an usnic acid of natural origin and/or (b) a relative salt thereof,
- wherein said (a) an usnic acid of natural origin is in racemic form 50% (+) and 50% (-), or in dextrorotatory form D(+), and
- wherein said (b) an usnic acid salt of natural origin is a salt of an alkaline or alkaline-earth metal; preferably said usnic acid of natural origin is an usnic acid sodium salt.

FR2. The semi-finished product PS according to FR1, wherein the resin is selected from the group comprising or, alternatively, consisting of polyurethane, urethane, polyacrylic, acrylic, polyvinyl, vinyl, polyamide or amide polymers or resins.

FR3. The semi-finished product PS according to FR1 or FR2, wherein said semi-finished product PS is in the form of a semi-solid cream or paste.

FR4. The semi-finished product PS according to any one of FR1-FR3, wherein said mixture M, contained in said semi-finished product PS, comprises or, alternatively, consists of said (a) an usnic acid of natural origin and/or said (b) a relative salt thereof, preferably said mixture M is present in said semi-finished product PS in an amount by weight comprised from 20% to 80%, preferably from 35% to 65%, even more preferably from 40% to 50%, for example 41%, 42%, 43%, 44%, 45%, 46%, 47%, 48% or 49%, with respect to the total weight of said semi-finished product PS.

FR5. The semi-finished product PS according to any one of FR1-FR4, wherein said resin is present, together with the mixture M, in said semi-finished product PS in an amount by weight comprised from 20% to 70%, preferably from 30% to 60%, even more preferably from 35% to 50%, for example 38%, 40%, 42% or 45%, with respect to the total weight of said semi-finished product PS.

FR6. The semi-finished product PS according to any one of FR1-FR5, wherein besides the mixture M and the resin, the semi-finished product PS may also preferably comprise (i) water in an amount by weight comprised from 5% to 30%, preferably from 10% to 20%, for example 15%, with respect to the total weight of the semi-finished product PS; (ii) additives, preservatives and a glycol, such as for example a propylene glycol or a diethylene glycol, at an amount by weight comprised from 0.5% to 5%, preferably from 1% to 1.5%, for example 2%, with respect to the total weight of the semi-finished product PS.

FR7. The semi-finished product PS according to any one of FR1-FR6, wherein besides said mixture M and said resin, said semi-finished product PS may further contain a preservative, for example, as mixture of two preservatives 5-chloro-2-methyl-2H-isothiazol-3-one [EC no. 247-500-7] and 2-methyl-2H-isothiazole-3-one [EC no. 220-239-6] at a by weight ratio 3:1, Index Number: 613-167-00-5 and CAS: 55965-84-9.

FR8. A use of a semi-finished product PS according to any one of FR1-FR7 wherein said semi-finished product PS is used as an antibacterial, antibacterial proliferative, bacteriostatic, microbicidal, anti-mould, anti-yeast (for example Candida), antifungal or antimycotic (for example Saccharomycetes), preferably against Gram-positive and/or Gram-negative bacteria, such as for example those having the scientific name *Klebsiella, Enterobatteriacee, Enterobacter, Pseudomonas* and *Escherichia.*

FR9. A method for rendering a surface antibacterial, antibacterial proliferative, bacteriostatic, microbicidal, anti-mould, anti-yeast (for example Candida), antifungal or antimycotic (for example *Saccharomycetes*), preferably against Gram-positive and/or Gram-negative bacteria, such as for example those having the scientific name *Klebsiella, Enterobatteriacee, Enterobacter, Pseudomonas* and *Escherichia,* said method provides for the application - by means of spray, roller or brush technique - of said semi-finished product PS on said surface, according to any one of FR1-FR7.

FR10. The method according to FR9, wherein said semi-finished product PS is applied on/over horizontal or vertical surfaces, for example floors, walls or ceilings for example made of cement, lime or plasterboard, linoleum, or polyvinyl chloride (PVC), polyamide (PA), polyethylene (PE), polyester (PES) or polyethylene terephthalate (PTF), preferably said surfaces being present in a medical clinic, emergency department, hospital, dental clinic, playground, kindergarten, school or washrooms and toilet facilities for example present in public or private facilities or for example in supermarkets and shopping malls or playgrounds, preferably, said finished product PF is preferably applied on indoor or outdoor surfaces, for example made of wood, steel, aluminium, fabric, non-woven fabric, hide, leather or glass; preferably said finished product PF is applied on/over said surfaces by means of spray, roller or brush technique.

Further preferred embodiments FRns of the present invention are reported below.

FRP1. A finished product PF comprising a semi-finished product PS, and a paint product; wherein:

- said semi-finished product PS comprises a mixture M, and a resin;
- said mixture M comprises or, alternatively, consists of (a) an usnic acid of natural origin and/or (b) a relative salt thereof, or
- said mixture M comprises or, alternatively, consists of an inclusion compound (ci) comprising or, alternatively, consisting of (i) a D-usnic acid as enantiomer, or a salt thereof, or mixtures thereof, of natural origin, e ii) a beta-cyclodextrin;
- wherein said (a) an usnic acid of natural origin is in racemic form 50% (+) and 50% (-), or in dextrorotatory form D(+), and
- wherein said (b) an usnic acid salt of natural origin is a salt of an alkaline or alkaline-earth metal; preferably said usnic acid of natural origin is an usnic acid sodium salt, and wherein
- said semi-finished product PS comprises a resin which is selected from the group comprising or, alternatively, consisting of polyurethane, urethane, polyacrylic, acrylic, polyvinyl, vinyl, polyamide or amide polymers or resins.

FRP2. The finished product PF according to FRP1, wherein said paint product is preferably selected from the group comprising or, alternatively, consisting of varnishes, enamels or paints; preferably said varnishes, enamels or paints are preferably selected from water solvent-based, or organic solvent-based.

FRP3. The finished product PF according to FRP1 or FRP2, wherein said paint product may preferably be in the liquid, dispersion or aqueous dispersion state.

FRP4. The finished product PF according to any one of FRP1-FRP3, wherein said semi-finished product PS is present in said finished product PF in an amount by weight comprised from 0.1% to 10%; preferably from 0.5% to 8%; even more preferably from 1% to 6%, for example 1%, 2%, 3%, 4%, or 5%, with respect to the weight of the paint product.

FRP5. A use of a finished product PF according to any one of FRP1-FRP4, wherein said finished product PF is used as an anti-bacterial, anti-bacterial proliferative, bacteriostatic, microbicidal, anti-mould, anti-yeast (for example *Candida*)*,* anti-fungal or antimycotic (for example *Saccharomycetes*)*,* preferably against Gram-positive and/or Gram-negative bacteria, such as for example those having the scientific name *Klebsiella, Enterobatteriacee, Enterobacter, Pseudomonas* and *Escherichia.*

FRP6. A method for rendering a surface anti-bacterial, anti-bacterial proliferative, bacteriostatic, microbicidal, anti-mould, anti-yeast (for example *Candida*)*,* anti-fungal or antimycotic (for example *Saccharomycetes),* preferably against Gram-positive and/or Gram-negative bacteria, such as for example those having the scientific name *Klebsiella, Enterobatteriacee, Enterobacter, Pseudomonas* and *Escherichia,* said method provides for the application - by means of spray, roller or brush technique - of said finished product PF on said surface, according to any one of FRP1-FRP4.

FRP7. The method according to FRP6, wherein said finished product PF is applied on/over horizontal or vertical surfaces, for example floors, walls or ceilings for example made of concrete, lime or plasterboard, linoleum, or polyvinyl chloride (PVC), polyamide (PA), polyethylene (PE), polyester (PES) or polyethylene terephthalate (PTF), preferably said surfaces being present in a medical clinic, emergency department, hospital, dental clinic, playground, kindergarten, school or washrooms and toilet facilities for example present in public or private facilities or for example in supermarkets and shopping malls or playgrounds.

FRP8. The method according to FRP7, wherein said finished product PF is preferably applied on indoor or outdoor surfaces, for example made of wood, steel, aluminium, fabric, non-woven fabric, hide, leather or glass; preferably said finished product PF is applied on/over said surfaces by means of a spray, roller or brush technique.

Reported hereinafter are some examples of the present invention, provided by way of non-limiting example. ISO 22196 is taken into consideration to measure the antibacterial activity of the mixture M, of the semi-finished product PS and of the finished product PF, all according to Table 1, applied on the plastic surfaces.

Advantageously, said mixture M, said semi-finished product PS and said finished product PF meet the requirements of the following standards:
UNI EN ISO 7784:2016 (abrasion resistance) and UNI EN ISO 18593:2018.

Advantageously, said mixture M, said semi-finished product PS and said finished product PF do not require a light activator or external energy such as for example UV light or a light at any wavelength, given that they are capable of fixing themselves independently once applied on a surface.

EXPERIMENTAL PART A

EXAMPLES.

EXAMPLE 1: Test of the effectiveness of the aqueous liquid composition of the present invention in relation to the Gram-positive pathogen *S. aureus* (MRSA).

The aqueous liquid composition was tested in relation to the efficacy against Gram-positive pathogen S. *aureus,* according to the test method ISO 22196:2007. The aqueous liquid composition comprises the D-usnic acid inclusion compound as a pure enantiomer of natural origin and (2-hydroxypropyl)-β-cyclodextrin.

The type of material tested was 6 untreated samples (divided into two groups) and 6 treated samples (divided into two groups) with the composition according to the present invention divided as follows:

- References (time 0h): CTRL1, CTRL2, CTRL3;
- References (time 24h): CTRL4, CTRL5, CTRL6;
- Samples treated with the composition according to the present invention: SSC7, SSC8, SSC9;

Samples treated with the composition according to the present invention subjected to ageing methods: SSC10, SSC11, SSC12.

The analysed sample comprises a 50x50 mm square plastic support coated with material to be tested, treated by means of painting. A square-shaped polyethylene coating film, 40x40 mm, thickness 0.1 mm, was used. The tested bacterial strain is methicillin resistant staphylococcus aureus (MRSA) ATCC 43300 ($10^6$ cells/ml), with a bacterial inoculum volume of 0.4 ml. The changes made to the International Standard protocol are a volume of Neutralizer (SCDLP) = 20 ml.

The test shall be deemed valid because it meets the following conditions as set out in the ISO 22196:2007 standard: 1) $(LOG_{MAX} - LOG_{MIN})/ LOG_{MEAN} \leq 0.2$

2) The average number of viable bacteria immediately after inoculation of the untreated test (reference) is within the range of $6.2 \times 10^3$ cells/cm$^2$ - $2.5 \times 10^4$ cells/cm$^2$;

3) The number of viable bacteria in each control sample after the 24-hour incubation is not less than $6.2 \times 10^1$ cells/cm$^2$.

The bacterial activity R is calculated according to the following equation:

$$R = (U_T - U_0) - (A_T - U_0) = U_T - A_T$$

| Untreated bacteria | $U_T = 5.17$ | R |
|---|---|---|
| Treated Ø | At = 2.01 | 3.16 |
| Aged treated | At = 0 | 5.17 |

The bacterial activity R is shown in the attached figure 3.

EXAMPLE 2: Efficacy test of the aqueous liquid composition according to Example 1 in relation to the Gram-negative pathogen *E. coli.*

The same procedure was followed as in Example 1, but in this case the tested bacterial strain was a Gram-negative pathogen strain of *Escherichia coli* ATCC 8739 ($6 \times 10^5$ cells/ml).

The bacterial activity R is calculated according to the following equation:

$$R = (U_T - U_0) - (A_T - U_0) = U_T - A_T$$

| Untreated bacteria | $U_T = 4.32$ | R |
|---|---|---|
| Treated Ø | At = 0 | 4.32 |
| Aged treated | At = 0 | 4.32 |

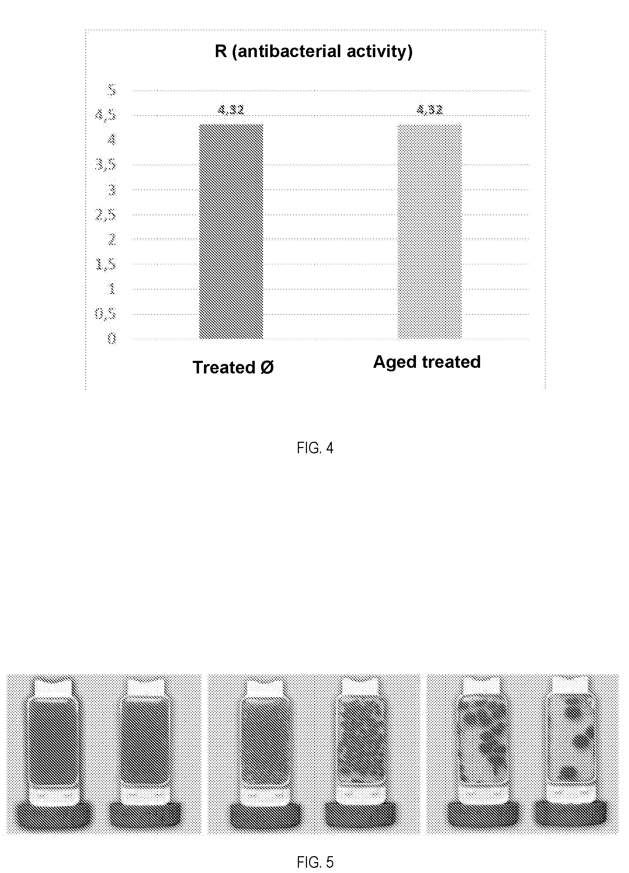

The bacterial activity R is shown in the attached figure 4.

The previous Example 1 and Example 2 show, after a contact of just 24 hours, a decrease in bacterial viability of about 100% (R% > 99.99%), the result calculated, as per the guideline, in a logarithmic efficacy index of the antimicrobial material.

This decrease is observed indifferently on both types of tested microorganisms ($R_{E.Coli}$ log = 4.96; $R_{St.Aureus}$ log= 4.30) with very similar values, advantageously showing an effective antibacterial ability both against Gram-positive and Gram-negative pathogenic bacteria.

From this consideration it is observable that the composition subject of the present invention may be useful for many purposes, including environments of daily life and sectorial environments: business, domestic, clinical-hospital.

EXAMPLE 3: Efficacy test of the aqueous liquid composition according to Example 1 in non-specific terms of the level of bacterial contamination.

The laboratory results obtained from surface tests suitable to indicate in non-specific terms the level of bacterial contamination of the sampled point are summarised below.

In a first series of tests carried out in a hospital facility, there was identified a room used as a dental clinic on whose surfaces the aqueous liquid composition of example 1, subject of the present invention, had been previously applied making said surfaces resistant to bacterial contamination.

In a second series of tests carried out in a kindergarten, the aqueous liquid composition of Example 1, subject of the present invention, was applied on the treadable surfaces of the floors of the rooms (common area and room for resting), making said surfaces resistant to bacterial contamination.

The UNI EN ISO 18593:2018 "horizontal method for surface sampling" standard with contact plate was taken into account in order to have traceability of the results obtained above. Specifically, "Contact slide 2 Liofilchem" was used. Before applying the aqueous liquid composition of Example 1, subject of the present invention, besides on the walls and on the treadable surfaces tests were also conducted on the walls and surfaces to determine the level of bacterial contamination representing the natural background (starting situation). After applying said composition subject of study, samplings were scheduled.

The activities were carried out under normal conditions of use of the room of the dental clinic (hospital facility), or of the rooms used to care for children (kindergarten). Therefore, the present study was conducted in a situation of real presence of the bacterial population, possibly, in some cases, even in the presence of users of the clinic. These conditions confirm the tendency of the treated surfaces to resist against re-contamination given that they revealed to be punctiform contaminations and not distributed in all the surfaces.

Besides the personal protective equipment (gown, gloves and mask), the materials used for bacterial load testing are Liofilchem contact plates item code 525272 for specific use according to the indicated standard. The product for professional use provides for the direct use of the surface of the plate in contact with the wall of the room or with the treadable surface, the subsequent incubation on a thermostated chamber at 30°C for a period of time of 24 hours and reading of the results expressed in Colony Forming Units (CFUs)/cm$^2$.

For tests in a hospital facility, the agreed protocol provides for identifying four separate points for each of the four walls present in the clinic room with identification of the points in an anti-clockwise direction, from one to four, following a logic of distribution of the surfaces to be sampled as representative as possible. It should therefore be considered that each sample represents 10 cm$^2$ in terms of surface area. Therefore, each sampling session analysed a surface area consisting of 16 samples, four per wall, for a total of 160 cm$^2$. The samples were numbered from 1 to 4 for the four wall-positions, therefore starting from the wall on the right from the entrance door of the room, the front wall to the armchair with a small window, the wall with windows and lastly the wall on the left of the entrance door, as indicated by the photos of the attached figure 5.

When carrying out the samplings in the hospital facility, a logic of the distribution of the points to be detected was followed, such to cover the largest surface area possible during the four sampling sessions.

Table 2 below summarises the results of the separate samplings in the hospital facility per sampling days:

Table 2

| DAY 1 | | DAY 2 | | DAY 3 | | DAY 4 | |
|---|---|---|---|---|---|---|---|
| point 1A | negative | point 1A | positive | point 1A | negative | point 1A | negative |
| point 2A | positive | point 2A | negative | point 2A | positive | point 2A | negative |
| point 3A | negative | point 3A | positive | point 3A | positive | point 3A | positive |
| point 4A | negative | point 4A | negative | point 4A | positive | point 4A | negative |

(continued)

| DAY 1 | | DAY 2 | | DAY 3 | | DAY 4 | |
|---|---|---|---|---|---|---|---|
| point 3B | negative | point 3B | negative | point 3B | positive | point 3B | negative |
| point 4B | negative | point 4B | negative | point 4B | positive | point 4B | positive |
| point 1C | positive | point 1C | negative | point 1C | negative | point 1C | positive |
| point 2C | negative | point 2C | negative | point 2C | negative | point 2C | positive |
| point 3C | negative | point 3C | negative | point 3C | negative | point 3C | negative |
| point 4C | positive | point 4C | negative | point 4C | negative | point 4C | negative |
| point 1D | negative | point 1D | positive | point 1D | negative | point 1D | negative |
| point 2D | negative | point 2D | positive | point 2D | negative | point 2D | negative |
| point 3D | negative | point 3D | negative | point 3D | negative | point 3D | negative |
| point 4D | positive | point 4D | positive | point 4D | negative | point 4D | positive |

For kindergarten tests, the agreed protocol provides for identifying a series of points distributed on the treadable surface of the floors of the rooms used following a logic of distribution of the surfaces to be sampled as representative as possible. It should therefore be considered that each sample represents 10 cm$^2$ in terms of surface area.

The test samples in the two areas present in the kindergarten are summarised in Table 3 (common area) and Table 4 (room for resting) below.

Table 3

| | COMMON AREA | TEST 1 | TEST 2 |
|---|---|---|---|
| | 28 | 2 | 7 |
| | 160 | 11 | 8 |
| | 65 | 15 | 7 |
| | 37 | 15 | 6 |
| | 130 | 10 | 16 |
| | 60 | 19 | 5 |
| | | 4 | 4 |
| | | 24 | 9 |
| PRE-TREATMENT colonies/test mean | **80** | 5 | 2 |
| | | 4 | 10 |
| | | 3 | 5 |
| | | 0 | 20 |
| | | 7 | 5 |
| | | 10 | 8 |
| | | 8 | 7 |
| POST-TREATMENT colonies/test mean | | **9.133** | **7.9** |
| Post treatment residual % | | 11.4 | 9.9 |

Table 4

| PRE-TREATMENT colonies/test mean | RESTING ROOM | TEST 1 | TEST 2 |
|---|---|---|---|
| | 210 | 2 | 2 |
| | 140 | 33 | 5 |
| | 90 | 12 | 6 |
| | 110 | 12 | 22 |
| | 230 | 22 | 12 |
| | 240 | 6 | 5 |
| | 75 | 8 | 4 |
| | | 25 | 30 |
| | **156.4** | 32 | 18 |
| | | 17 | 20 |
| | POST-TREATMENT colonies/test mean | **16.9** | **12.4** |
| | Post treatment residual % | 10.8 | 7.9 |

In conclusion, the data collected in the sampling sessions report an overall resistance of the surfaces to re-contamination considering the starting values, possibly also the type of the still punctiform and isolated colonies, considering the initial values, decrease in microbial load of the surfaces subjected to treatment with the composition subject of the present invention:

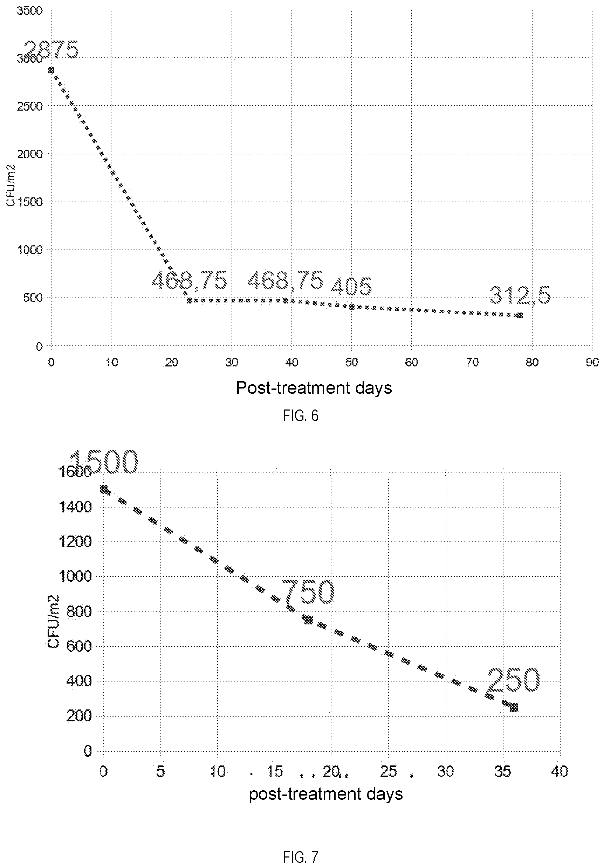

- in the tests carried out in the hospital facility, it reaches 90%, as observable from the chart reported in figure 6, having gone from just less than 3000 CFUs/$cm^2$ to values close to 300 CFUs/$cm^2$. Another important data to be noted is the numerical constant of the results obtained (468.75 CFUs/$cm^2$, 468.75 CFUs/$cm^2$, 405.0 CFUs/$cm^2$, 312.5 CFUs/$cm^2$) obtained with a given tendency to decrease as number of microorganisms over time.
- In the tests carried out in kindergarten, the bacterial load is residual, between 8% and 12%, as observable from the previous Table 3 and Table 4.

EXAMPLE 4: Further efficacy tests of the aqueous liquid composition according to Example 1 in non-specific terms of the level of bacterial contamination.

The tests were carried out according to ISO 18593, and show an excellent repeatability.
The sampling conditions were as follows:

Reference sampling: Hospitalisation / clinic room at rest after sanitisation;
Post-treatment sampling: Hospitalisation /clinic room in use.

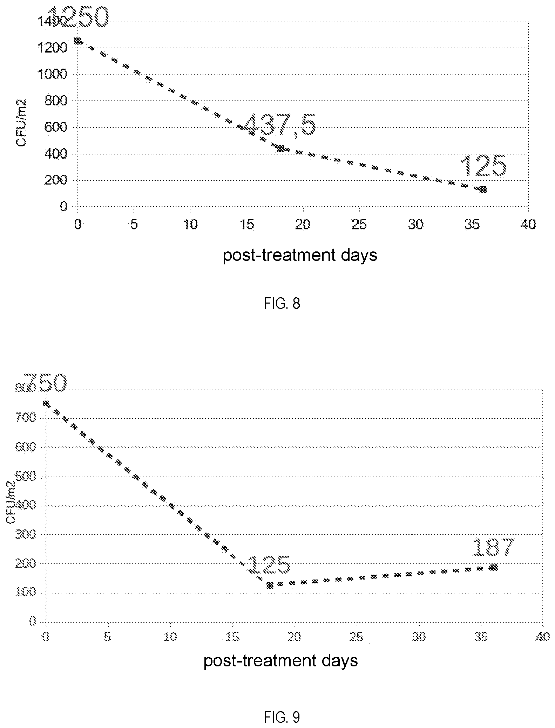

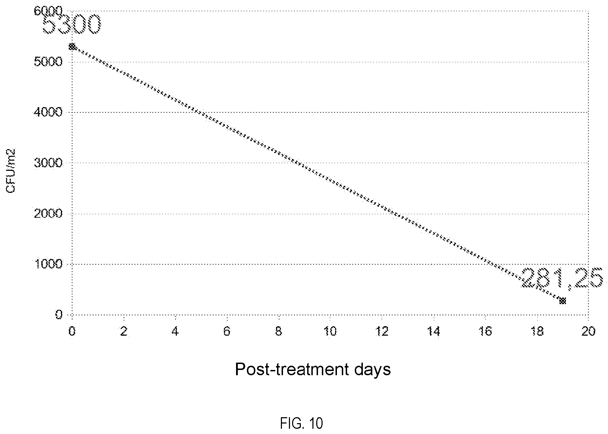

Such conditions represent the worst case for verifying the efficacy of the treatment with the composition subject of the present invention.
The treatment, after obtaining a series of excellent *in vitro* results (ISO 22196 and ASTM 2180), is proposed as a candidate for the prevention and control of the bacterial load on nosocomial surfaces.
Bacterial load samples were collected by means of "Contact slide ISO 18593" for *in vivo* validation before and after said treatment to monitor the trend of the generic load expressed in CFUs/$m^2$ (colony forming units per square metre).
Other samples were collected approximately 25 days apart in order to monitor the development of efficacy over time.
Laboratory tests by means of accelerated ageing showed excellent stability of efficacy over time (efficacy guaranteed for 3 years).
The number of samples collected ensures that the statistical data obtained is excellent (up to 32 tests per room per step).
This validation considers 5 different hospital environments that can be classified as clinics and hospitalisation rooms.
The tests were conducted in compliance with the latest guidelines for microbiological monitoring of hospital environments.
The attached figures 7, 8, 9, 10 report the results, divided by room and by sampling date, and their trend over time. Furthermore, Table 5 below reports - figure by figure - the percentages of decrease / reduction of the bacterial load.

Table 5

| | Bacterial load reduction (%) after 18 days | Bacterial load reduction (%) after 36 days |
|---|---|---|
| Figure 7 | 50 | 87.5 |
| Figure 8 | 65 | 90 |
| Figure 9 | 84* | 75 |
| Figure 10 | 95 | n.d. |
| * sampling data (125 CFUs/m2) conducted at an unusual, peak-activity moment of the clinic. | | |

Advantageously, the surface treated with the aqueous liquid composition of Example 1, subject of the present invention, is constantly sanitised, thanks to the inclusion compound (ci) contained therein.

Advantageously, such efficacy of sanitisation (decrease in the pathogenic load) is constant for at least 3 years from the application, as determined through tests after accelerated ageing according to ISO 22196:2007(E) standard (in the version in force at the priority date of the present patent application).

Advantageously, the aqueous liquid composition subject of the present invention (such as for example that of Example 1) finds particular use in the hospital environment, given that said composition appears suitable to limit the nosocomial bacterial load (and not only) both against Gram-positive and Gram-negative pathogenic bacteria. This unexpected result advantageously allows patients to stay in an environment as sterile as possible.

EXPERIMENTAL PART B

EXAMPLES

EXAMPLE 1

1.1 Purpose

Verifying the microbicidal efficacy of devices treated with the antimicrobial agent subject of the present invention based on usnic acid and/or a relative salt thereof, of natural origin, preferably the sodium salt, in the racemic or dextrorotatory form D(+). A test was conducted according to the described procedure, standard reference ASTM E2180-07, using microbial strains considered as indicative.

2.1 Principle of the test method

The ASTM E2180-07 standard describes the test method for quantitatively evaluating the antimicrobial efficacy of agents incorporated in or on polymeric or hydrophobic surfaces. This method entails inoculation of a semi-solid agar (agar slurry) molten with a standardised culture of microbial cells. A thin layer of inoculated agar slurry is transferred over the surfaces to be tested and onto others used as control. After one or more specified contact times, the surviving microorganisms are recovered by eluting the agar slurry inoculum from the test substrate in a neutralising agent and extracted using a method that ensures complete removal of the inoculum from the test surface. Serial dilutions are then prepared, each seeded for inclusion in a suitable growth medium. After incubating the plates under the conditions specified for the test microorganisms used, the number of surviving microbial colonies for each dilution is counted and recorded. The percentage decrease in microorganisms is then calculated by comparing the surviving microorganisms on samples of surfaces treated with antimicrobials with those recovered on untreated surfaces taken as reference.

3.1. Reference legislation

The test described in the present report refers to the legislation specified below. ASTM E2180-07 *"Standard Test Method for Determining the Activity of Incorporated Antimicrobial Agent(s) in Polymeric or Hydrophobic Materials"*.

3.2. Internal references

The tests conducted and described below refer to the following operating procedures and instructions, submitted to the ISO 9001 and ISO 13485 certified Quality Management System.

- P08 "Analysis and validation tests" rev. 05 of 01/10/2013;

- P09 "Infrastructure management" rev. 03 of 01/10/2013;
- P10 "Equipment management" rev. 03 of 01/10/2013;
- I01 "Strain management" rev. 01 of 10/05/2011;
- 102 "Management of growth media and reagents" rev. 03 of 02/03/2015.

## 4. IDENTIFICATION OF THE SAMPLES UNDER EXAMINATION

The product under examination consists of devices treated with a mixture M based on usnic acid and/or a relative salt thereof, of natural origin, preferably the sodium salt, in the racemic or dextrorotatory form D(+), to obtain antimicrobial properties; devices of the same material devoid of antimicrobial agent were used as a reference. Samples of devices treated or not treated with antimicrobial agent used for the trial, as identified below, were manufactured according to internal procedures. The samples to be tested appeared as rectangles of dimensions approximately equal to 2 x 8 cm.

Table 6

| Identification | Code |
| --- | --- |
| DEVICES TREATED WITH USNIC ACID of synthetic origin | SAMPLE 1 |
| DEVICES TREATED WITH USNIC ACID of natural origin according to the present invention | SAMPLE 2 |
| REFERENCE DEVICES - BLANK | TEST |

## 5. EQUIPMENT AND REAGENTS

The following laboratory reagents, materials and equipment were used for the test:

- diluent for the preparation of microbial suspensions: saline solution with NaCl 9 g/l COD. SA279/2015 Exp. 10/03/2016;
- growth medium for bacteria: Tryptone Soy Agar (TSA) Cod. SA289/2015 Exp. 22/03/2016;
- agar slurry: a semi-gelatinous preparation containing agar-agar 3 g/l and NaCl 8.5 g/l Cod. SA292/2015 Exp. 24/12/2015;
- recovery broth / neutraliser: solution in Tryptone Soy Broth containing tween 80 30 ml/l, saponin 30 g/l, L-histidine 1 g/l, egg lecithin 3 g/l, sodium thiosulphate 5 g/l Cod. SA230/2015 Exp. 14/01/2016;
- thermostated bath MPM INSTRUMENTS Cod. SA65 controlled at $(45 \pm 1)°C$;
- thermostated bath CHIMICA OMNIA Cod. SA15 controlled at $(45 \pm 1)°C$;
- vortex mixer VELP SCIENTIFICA Cod. SA52;
- thermostat PID SYSTEM Cod. SA66 controlled at $(36 \pm 1)°C$;
- fridge thermostat VELP SCIENTIFICA Cod. SA82 controlled at $(31 \pm 1)°C$;
- spectrophotometer GENESYS 10 Cod. SA26;
- various sterile material (e.g. scissors, grippers etc.).

The media and reagent used shall be prepared according to the manufacturer's instructions and/or the reference method, as reported in the internal operating instructions. The media used in the tests were checked for fertility and sterility. The equipment is managed according to internal procedures; at the time of the tests the equipment was in the valid calibration condition.

Work environment preparation, material management and handling operations shall be carried out according to the specifications defined in the relevant internal procedures.

## 6. DESCRIPTION OF THE METHOD

6.1. Experimental conditions

The antimicrobial efficacy test was conducted under the following experimental conditions.

- Microbial strain: *Escherichia coli* ATCC 10536 (Gram-negative bacteria).

The incubation conditions adopted for the test strain are detailed in the table below.

Table 7 - Microbial strain development conditions

| Test strain | Medium | Temperature (°C) | Time (h) |
|---|---|---|---|
| *Escherichia coli* | TSA | $(36 \pm 1)°C$ | 48 hours |

Contact time: the contact times agreed with the customer are specified in the table below.

Table 8 - Contact times

| Contact times |
|---|
| 24 h (1 day) and 72 h (3 days) |

Reference: devices not treated with mixture M (without usnic acid).

6.2. Description of the test

The microbial strain was transplanted on *slant* of suitable medium for 24 hours and then diluted in saline solution up to reaching a concentration, estimated through spectrophotometric reading, comprised between 1-5 x 108 cfu/ml. The number of microbial cells in the suspension was determined using 10-scalar dilutions in saline solution, up to 10-6. Two 1 ml aliquots were taken from this dilution and seeded for inclusion in medium. After incubating and counting the colonies developed on the plates, the number of colony forming units per ml (cfu/ml) in the suspension was determined.

1.0 ml of microbial suspension was seeded in 100 ml of agar slurry, kept molten at a temperature of 45°C, to obtain a final concentration of cells in each agar slurry comprised between 1-5 x 106 cfu/ml. The test and reference devices were prepared by inserting 5 pieces into a suitably identified plate for the contact time defined above. 1.0 ml of inoculated agar slurry was transferred to each of the test and control samples prepared for the test suspension. The inoculation was conducted with an angle and a speed such to avoid dispersion of the suspension outside the sample. After allowing the agar slurry inoculum to gel, the samples were placed in the incubator at the temperature suitable for the development of the microbial strain for the defined contact times. Humidity was kept at a level above 75% in the thermostat using a water-containing tray so as to prevent agar slurry inoculum from drying. At each of the defined contact times the samples of treated and non-reference devices were removed from the petri dishes and transferred to an Erlenmeyer flask containing neutralising broth in a volume such to form a 1:10 dilution of the initial inoculum. The Erlenmeyer flasks were sonicated for 1 minute, followed by subsequent mechanical mixing using the vortex so as to ensure complete release of the agar slurry from the sample. Then the neutralising broth was subjected to 1:10 serial dilutions, each seeded by inclusion in suitable medium. The sample was seeded by inclusion in molten medium in order to determine the effectiveness of the release from the treated surface. After incubation, the number of colonies developed for each of the prepared dilutions was counted and recorded, calculating the number of surviving microorganisms (cfu/ml) for each contact time.

6.3. Calculation and expression of results

The results were expressed as a percentage decrease in microbial contamination of the treated device sample with respect to the untreated one, as defined in the reference standard. The geometric mean of the number of microorganisms recovered in the five replicates conducted for devices treated with antimicrobial agent and untreated devices was calculated; the percentage difference between the antilog of geometric mean of the control sample and the antilog of geometric mean of the treated sample was therefore calculated.

$$\text{Geometric mean} = (LogR1 + LogR2 + LogR3 + LogR4 + LogR5)/5$$

Where:
R1/2/3/4/5 = total number of microorganisms recovered after exposure to the substance under examination or control and incubation (replicate 1/2/3/4/5).

$$\text{Percentage decrease} = (a-b)x100/a$$

Where:

a = antilog of geometric mean of the untreated reference device
b = antilog of geometric mean of the treated device

6.4. Test validity criteria

The test is considered valid when the recovery of the initial microorganisms is equal to or greater than 104 cfu/ml. In order to declare a device effective under the test conditions, the ASTM 2180 reference standard requires a percentage decrease in microbial contamination evaluated with respect to the untreated reference, equal to or greater than 99%.

7. RESULTS

The results obtained are summarised in the tables below.

Table 9: strain count (cfu/ml)

| Strain | Dilution $10^{-6}$ (cfu/ml) | Result (cfu/ml) | Inoculum (cfu/ml) |
|---|---|---|---|
| *Escherichia coli* ATCC 10536 | 169 - 183 | $1.76 \times 10^8$ | $1.76 \times 10^6$ |

Table 10: mean log expression of the surviving microorganisms at the different contact times

| Strain | | T 24 h | T 72 h |
|---|---|---|---|
| *E. coli* ATCC 10536 | Control | 5.28 | 4.76 |
| | Sample 1 | 5.27 | 2.59 |
| | Sample 2 | 1.91 | 1.33 |

Table 11: percentage decrease at different contact times

| | Sample 1 | | Sample 2 | |
|---|---|---|---|---|
| Strain | T 24 h | T72h | T 24 h | T 72 h |
| *Escherichia coli* ATCC 10536 | 2.28% | 99.32% | 99.96% | 99.96% |

Table 12: log decrease at different contact times

| | Sample 1 | | Sample 2 | |
|---|---|---|---|---|
| Strain | T 24 h | T72h | T 24 h | T 72 h |
| *Escherichia coli* ATCC 10536 | 0.01 | 2.17 | 3.37 | 3.43 |

8. CONCLUSIONS

Based on the results obtained, following the test validity criteria, it can be concluded that, according to the requirements laid down by the ASTM E-2180-07 standard (decrease greater than 99%):

- the devices treated with a mixture M based on usnic acid identified as "SAMPLE 1" (usnic acid of synthetic origin, not according to the present invention) are effective against the test strain (*E.coli*) at the contact time of 72 hours;
- the devices treated with a mixture based on usnic acid identified as "SAMPLE 2" (usnic acid of natural origin according to the present invention) are effective against the test strain (*E.coli*) at the contact time of 24 hours.

EXAMPLE 2

2.1. Purpose

The microbicidal efficacy of devices treated with a mixture M based on usnic acid and/or a relative salt thereof, of natural origin, preferably sodium salt, in the racemic or dextrorotatory form D(+), was verified. A test was conducted according to the described procedure, standard reference ASTM E2180-07, using microbial strains considered as indicative.

2.2. Principle of the test method

The ASTM E2180-07 standard describes the test method for quantitatively evaluating the antimicrobial efficacy of agents incorporated in or on polymeric or hydrophobic surfaces. This method entails inoculation of a semi-solid agar (agar slurry) molten with a standardised culture of microbial cells. A thin layer of *inoculated* agar slurry is transferred over surfaces to be tested and onto other surfaces used as control. After one or more specified contact times, the surviving microorganisms are recovered by eluting the agar slurry inoculum from the test substrate in a neutralising agent and extracted using a method that ensures complete removal of the inoculum from the test surface. Serial dilutions are then prepared, each seeded for inclusion in a suitable growth medium. After incubating the plates under the conditions specified for the test microorganisms used, the number of surviving microbial colonies for each dilution is counted and recorded. The percentage decrease in microorganisms is then calculated by comparing the surviving microorganisms on samples of surfaces treated with antimicrobials with those recovered on untreated surfaces taken as reference.

3.1. Reference legislation

The test described in the present report refers to the legislation specified below.

-    ASTM E2180-07 *"Standard Test Method for Determining the Activity of Incorporated Antimicrobial Agent(s) in Polymeric or Hydrophobic Materials"*.

3.2. Internal references

The tests conducted and described in the present report refer to the following operating procedures and instructions, submitted to the ISO 9001 and ISO 13485 certified Quality Management System.

-    P08 "Analysis and validation tests" rev. 05 of 01/10/2013;
-    P09 "Infrastructure management" rev. 03 of 01/10/2013;
-    P10 "Equipment management" rev. 03 of 01/10/2013;
-    I01 "Strain management" rev. 01 of 10/05/2011;
-    I02 "Management of growth media and reagents" rev. 03 of 02/03/2015.

4. IDENTIFICATION OF THE SAMPLES UNDER EXAMINATION

The product under examination consists of devices treated with a mixture M based on usnic acid to obtain antimicrobial properties; devices of the same material devoid of antimicrobial agent were used as reference. Samples of devices treated or not treated with antimicrobial agent used for the trial, as identified below, were manufactured according to internal procedures.

The samples to be tested appeared as rectangles of dimensions approximately equal to 2 x 8 cm.

Table 13

| Identification | Code |
|---|---|
| DEVICES TREATED WITH USNIC ACID | TEST |
| REFERENCE DEVICES - BLANK | TEST |

5. EQUIPMENT AND REAGENTS

The following laboratory reagents, materials and equipment were used for the test:

-    diluent for the preparation of microbial suspensions: saline solution with NaCl 9 g/l COD. SA 226/2015 Exp. 10/01/2016;
-    growth medium for bacteria: Tryptone Soy Agar (TSA) Cod. SA 225/2015 Exp. 10/01/2016;
-    growth medium for yeasts: Sabouraud Agar (SAB) Cod. SA 219/2015 Exp. 10/01/2016;
-    agar slurry: a semi-gelatinous preparation containing agar-agar 3 g/l and NaCl 8.5 g/l Cod. SA 229/2015 Exp. 14/10/2015;
-    recovery broth / neutraliser: solution in Tryptone Soy Broth containing tween 80 30 ml/l, saponin 30 g/l, L-histidine 1 g/l, egg lecithin 3 g/l, sodium thiosulphate 5 g/l Cod. SA 230/2015 Exp. 14/01/2016;

- thermostated bath MPM INSTRUMENTS Cod. SA 65 controlled at $(45 \pm 1)$°C;
- thermostated bath CHIMICA OMNIA Cod. SA 15 controlled at $(45 \pm 1)$°C;
- vortex mixer VELP SCIENTIFICA Cod. SA 52;
- thermostat PID SYSTEM Cod. SA 66 controlled at $(36 \pm 1)$°C;
- fridge thermostat VELP SCIENTIFICA Cod. SA 82 controlled at $(31 \pm 1)$°C;
- spectrophotometer GENESYS 10 Cod. SA 26;
- various sterile material (e.g. scissors, grippers etc.).

The media and reagent used shall be prepared according to the manufacturer's instructions and/or the reference method, as reported in the Environment Study internal operating instructions. The media used in the tests were checked for fertility and sterility.

6. DESCRIPTION OF THE METHOD

6.1. Experimental conditions

The antimicrobial efficacy test was conducted under the following experimental conditions.

- Microbial strains: *Staphylococcus aureus* MRSA ATCC 43300 (Gram-positive bacteria), *Escherichia coli ATCC 10536* (Gram-negative bacteria), *Candida albicans* ATCC 10231 (yeasts).

The incubation conditions adopted for the test strains are detailed in the table below.

Table 14

| Test strain | Medium | Temperature (°C) | Time (h) |
|---|---|---|---|
| *Staphylococcus aureus* MRSA | TSA | $(36 \pm 1)$°C | 48 hours |

Contact time: contact times are specified in the table below.

Table 15

| Contact times |
|---|
| 24 h (1 day) and 48 h (2 days) |

Reference: devices not treated with said mixture M based on usnic acid.

6.2. Description of the test

Each microbial strain was transplanted on slant of suitable medium for 24 hours and then diluted in saline solution up to reaching a concentration, estimated using spectrophotometric reading, comprised between 1-5 x 108 cfu/ml. The number of microbial cells in each suspension was determined using 10-scalar dilutions in saline solution, up to 10-6. Two 1 ml aliquots were taken from this dilution and seeded for inclusion in medium. After incubating and counting the colonies developed on the plates, the number of colony forming units per ml (cfu/ml) in each suspension was determined. 1.0 ml of microbial each suspension was seeded in 100 ml of agar slurry, kept molten at a temperature of 45°C, to obtain a final concentration of cells in each agar slurry comprised between 1-5 x 106 cfu/ml. The test and reference devices were prepared by inserting 5 pieces into a suitably identified plate for the contact time defined above. 1.0 ml of inoculated agar slurry was transferred to each of the test and control samples prepared for each of the test suspensions. The inoculation was conducted with an angle and a speed such to avoid dispersion of the suspension outside the sample. After allowing the agar slurry inoculum to gel, the samples were placed in the incubator at the temperature suitable for the development of microbial strains for the defined contact times. Humidity was kept at a level above 75% in the thermostat using a water-containing tray so as to prevent agar slurry inoculum from drying. At each of the defined contact times the samples of treated and non-reference devices were removed from the petri dishes and transferred to a Erlenmeyer flask containing neutralising broth in a volume such to form a 1:10 dilution of the initial inoculum. The Erlenmeyer flasks were sonicated for 1 minute, followed by subsequent mechanical mixing using the vortex so as to ensure complete release of the agar slurry from the sample. Therefore, the neutralising broth was subjected to 1:10 serial dilutions, each seeded by inclusion in medium suitable for the development of the specific microbial strain. The sample was seeded by inclusion in molten medium in order to determine the effectiveness of the release from the treated surface. After incubation, the number of colonies developed for each of the prepared dilutions was counted and recorded, calculating the number of surviving microorganisms (cfu/ml) for each suspension and contact time.

6.3. Calculation and expression of results

The results were expressed as a percentage decrease in microbial contamination of the treated device sample with respect to the untreated one, as defined in the reference standard. The geometric mean of the number of microorganisms recovered in the five replicates conducted for devices treated with antimicrobial agent and untreated devices was calculated; the percentage difference between the antilog of geometric mean of the control sample and the antilog of geometric mean of the treated sample was therefore calculated.

$$\text{Geometric mean} = (LogR1 + LogR2 + LogR3 + LogR4 + LogR5)/5$$

Where:
R1/2/3/4/5 = total number of microorganisms recovered after exposure to the substance under examination or control and incubation (replicate 1/2/3/4/5).

$$\text{Percentage decrease} = (a-b)x100/a$$

Where:

a = antilog of geometric mean of the untreated reference device
b = antilog of geometric mean of the treated device

6.4. Test validity criteria

The test is considered valid when the recovery of the initial microorganisms is equal to or greater than 104 cfu/ml. In order to declare a device effective under the test conditions, the ASTM 2180 reference standard requires a percentage decrease in microbial contamination evaluated with respect to the untreated reference, equal to or greater than 99%.

7. RESULTS

The results obtained are summarised in the tables below.

Table 16: strain count (cfu/ml)

| Strain | Dilution $10^{-6}$ (cfu/ml) | Result (cfu/ml) | Inoculum (cfu/ml) |
|---|---|---|---|
| *Staphylococcus aureus* MRSA ATCC 43300 | 34 - 39 | $0.37 \times 10^8$ | $0.37 \times 10^6$ |

Table 17: mean log expression of the surviving microorganisms at the different contact times

| Strains | | T 24 h | T 48 h |
|---|---|---|---|
| S. *aureus* MRSA ATCC 43300 | Control | 4.31 | 4.59 |
| | Sample | < 1.00 | < 1.00 |

Table 18: percentage decrease at different contact times

| Strains | T 24 h | T 48 h |
|---|---|---|
| S. *aureus* MRSA ATCC 43300 | 99.95% | 99.97% |

Table 19: log decrease at different contact times

| Strains | T 24 h | T72h |
|---|---|---|
| S. *aureus* MRSA ATCC 43300 | > 3.31 | > 3.59 |

8. CONCLUSIONS

Based on the results obtained, following the test validity criteria, it can be concluded that the devices treated with usnic acid (subject of the present invention) are effective, according to the requirements laid down by the ASTM E-2180-07 standard (decrease greater than 99%) and under the test conditions at the contact time of 24 hours, against the representative strain of Gram-positive bacteria (*Staphylococcus aureus* MRSA).

EXPERIMENTAL PART

Table 20

|  | NPS |  | HS360 3%NPS | HS360 6%NPS |
|---|---|---|---|---|
| usnic acid | 18% | usnic acid | 0.54% | 1.08% |
| sodium usnic | 18% | sodium usnic | 0.54% | 1.08% |
| beta-cyclodextrins | 25% | beta-cyclodextrins | 0.75% | 1.5% |
| acrylic resin | 10.14% | acrylic resin | 4.8% | 4.8% |
| distilled water | 26% | distilled water | 42.29% | 40.46% |
| additives | 2.55% | additives | 4.7% | 4.7% |
| butyldiglycol | 0.31% | butyldiglycol | 3% | 3% |
| Total | 100 | diethylene glycol | 1.24% | 1.24% |
|  |  | polyurethane resin | 33.42% | 33.42% |
|  |  | opacifying waxes | 5.33% | 5.33% |
|  |  | thixotropic agent | 3.39% | 3.39% |
|  |  | Total | 100 | 100 |

PROVA 1: ISO 22196:2011 (antibacterial) 3% Time zero (2 weeks after application)

Test report 305146/1
Sample name HS 360 Hydro Shield / NPS Fast 3%
Determination of antibacterial action on plastics and other non-porous materials. ISO 22196:2011
Material tested: varnish on glass 50x50x2 mm
Coating film: PET, 40x40 mm, thickness 0.10 mm
Bacterial strains: E. coli DSM 1576, S. aureus DSM 346
Inoculum volume: 0.4 ml
Inoculum E. coli 6.9E+05 cfu/ml
Inoculum S. aureus 2.7E+05 cfu/ml
Results:

Antibacterial activity R=2.3 versus E. coli
Antibacterial activity R=2.1 versus S. aureus

PROVA 2: ISO 22196:2011 (antibacterial) 3% to 36 months of ageing

Test report 310169/1
Sample name HS 360 Hydro Shield/NPS Fast 3% aged to 36 months
Determining the antibacterial action ISO 22196:2011
Material tested: varnish on glass 50x50x2 mm

Coating film: PET, 40x40 mm, thickness 0.10 mm
Bacterial strains: E. coli DSM 1576, S. aureus DSM 346
Inoculum volume: 0.4 ml
Inoculum E. coli 4.9E+05 cfu/ml
Inoculum S. aureus 5.7E+05 cfu/ml
Results:

Antibacterial activity R=1.7 versus E. coli
Antibacterial activity R=2.6 versus S. aureus

PROVA 3: Report R2106FSVES001

Antiviral activity of the product HS 360 coating 6% NPS Fast tested on an active and inactive surface against human coronavirus SARS-CoV2 at contact time of 12, 24 and 36 hours according to the ISO 21702 (2019) standard. The flat glass surface is the test control.

1. Human coronavirus SARS-CoV2 at contact time of 12 hours

Under experimental conditions (25°C, 12 hours, 90% RH), the product HS 360 Coating 6% NPS Fast shows an antiviral activity R (log10/cm2) of 3.1log10 (99.92%) efficacy under the ISO 21702 conditions.

2. Human coronavirus SARS-CoV2 at contact time of 24 hours

Under experimental conditions (25°C, 24 hours, 90% RH), the product HS 360 Coating 6% NPS Fast shows an antiviral activity R (log10/cm2) of 2.7log10 (99.80%) efficacy under the ISO 21702 conditions.

3. Human coronavirus SARS-CoV2 at contact time of 36 hours

Under experimental conditions (25°C, 36 hours, 90% RH), the product HS 360 Coating 6% NPS Fast shows an antiviral activity R (log10/cm2) of 2.2log10 (99.37%) efficacy under the ISO 21702 conditions.

PROVA 4: R2111FSVES001

Antiviral activity of the product HS 360 Coating 6% NPS Fast at 3 years of ageing tested on a surface against the human coronavirus SARS-CoV2 at contact time of 24 hours according to the ISO 21702 (2019) standard. The flat glass surface is the test control.

1. Human coronavirus SARS-CoV2 at contact time of 24 hours

Under experimental conditions (25°C, 24 hours, 90% RH), the product HS 360 Coating 6% NPS Fast at 3 years of ageing tested on a surface shows an antiviral activity R (log10/cm2) of 1.8log10 (98.42%) efficacy under the ISO 21702 conditions.

Advantageously, the semi-finished product PS and the finished product PF, referred to as NPS and HS 360, respectively, in an embodiment reported in Table 20, simultaneously show an antibacterial and an antiviral activity, these two activities shown together allow to state that the finished product subject of the present invention is a sanitiser because it has successfully passed the sanitising procedure (N.° IPC-VAL-08) according to the regulation in force.

EXPERIMENTAL PART

The semi-finished product PS and the finished product PF, both subject of the present invention, were also tested from the point of view of stability of the mechanical and physical properties over time, according to the following tests:

i) Test report 308048/1

- Sample HS 360 Hydro Shield / NPS Fast 3%
- Abrasion resistance UNI EN 15185:2011
- Abrasimeter used: Taber mod. 5151
- Sandpapers: Taber S-42 batch n° 83471

- Mean grinding wheel hardness: 65 ± 3 Shore A
- Correction factor: 1.02
- Type of surface: transparent varnishing
- Results: start point n° of revolutions 330; class achieved according to the classification CENT/TS 16209 = A (≥300)

ii) Test report 308048/2

- Sample HS 360 Hydro Shield / NPS Fast 3%
- Resistance of the surfaces to scratch UNI EN 15186:2012, met. B
- Equipment used: Taber mod. 502
- Results: load 1 N; class achieved according to classification CENT/TS 16209 = C

iii) Test report 308048/3

- Sample HS 360 Hydro Shield / NPS Fast 3%
- Resistance to temperature changes UNI EN 9429:2015
- Method used: Met. B
- Equipment used: climatic chamber WEISS WK3
- Results: index 0 (no breakage); index 0 (no drop); index 0 (no whitening)

iv) Test report 308048/7

- Sample HS 360 Hydro Shield / NPS Fast 3%
- Resistance of the surfaces to moist heat UNI EN 12721:2013
- Tested temperatures: 55°C, 70°C, 85°C, 100°C
- Results: class achieved according to classification CEN/TS 16209 = A (≥4, slight change observable only with reflected light)

Advantageously, besides showing good mechanical resistance to abrasion and scratch with respect to the surfaces where they are applied, the semi-finished product PS and the finished product PF - referred to as NPS and HS 360, respectively, in an embodiment reported in Table 20 - show to be universal products ready for use on all surfaces and show good stability properties when the surfaces on which they are used are subjected to high light, temperature and humidity conditions.

**Claims**

1. A finished product PF comprising a semi-finished product PS, and a paint product; wherein:

   - said semi-finished product PS comprises a mixture M, and a resin; in which
   - said mixture M comprises or, alternatively, consists of (a) an usnic acid of natural origin and/or (b) a relative salt thereof, or
   - said mixture M comprises or, alternatively, consists of an inclusion compound (ci) comprising or, alternatively, consisting of (i) an usnic acid of natural origin, or a salt thereof, or mixtures thereof, and ii) a beta-cyclodextrin;
   - wherein said (a) an usnic acid of natural origin is in racemic form 50% (+) and 50% (-), or in dextrorotatory form D(+), and
   - wherein said (b) an usnic acid salt of natural origin is a salt of an alkaline or alkaline-earth metal; preferably said usnic acid of natural origin is an usnic acid sodium salt, and wherein
   - said semi-finished product PS comprises a resin which is selected from the group comprising or, alternatively, consisting of polyurethane, urethane, polyacrylic, acrylic, polyvinyl, vinyl, polyamide or amide polymers or resins.

2. The finished product PF according to claim 1, wherein said paint product is preferably selected from the group comprising or, alternatively, consisting of varnishes, enamels or paints; preferably said varnishes, enamels or paints are preferably selected from water solvent-based, or organic solvent-based.

3. The finished product PF according to claim 1 or 2, wherein said paint product may preferably be in the liquid, dispersion or aqueous dispersion state.

4. The finished product PF according to any one of claims 1-3, wherein said semi-finished product PS is present in said finished product PF in an amount by weight comprised from 0.1% to 10%; preferably from 0.5% to 8%; even more preferably from 1% to 6%, for example 1%, 2%, 3%, 4%, or 5%, with respect to the weight of the paint product.

5. A use of a PF finished product according to any one of claims 1-4, wherein said finished product PF is used as an antiviral, preferably against the human coronavirus SARS-CoV2.

6. A use of a finished product PF according to any one of claims 1-4, wherein said finished product PF is used as an anti-bacterial, anti-bacterial proliferative, bacteriostatic, microbicidal, anti-mould, anti-yeast (for example *Candida),* anti-fungal or antimycotic (for example *Saccharomycetes),* preferably against Gram-positive and/or Gram-negative bacteria, such as for example those having the scientific name *Klebsiella, Enterobatteriacee, Enterobacter, Pseudomonas* and *Escherichia.*

7. A method for rendering a surface antiviral, preferably against the human coronavirus SARS-CoV2, said method provides for the application - by means of spray, roller or brush technique - of said finished product PF on said surface, according to any one of claims 1-4.

8. A method for rendering a surface anti-bacterial, anti-bacterial proliferative, bacteriostatic, microbicidal, anti-mould, anti-yeast (for example *Candida),* anti-fungal or antimycotic (for example *Saccharomycetes),* preferably against Gram-positive and/or Gram-negative bacteria, such as for example those having the scientific name *Klebsiella, Enterobatteriacee, Enterobacter, Pseudomonas* and *Escherichia,* said method provides for the application - by means of spray, roller or brush technique - of said finished product PF on said surface, according to any one of claims 1-4.

9. The method according to claim 7or 8, wherein said finished product PF is applied on/over horizontal or vertical surfaces, for example floors, walls or ceilings for example made of concrete, lime or plasterboard, linoleum, or polyvinyl chloride (PVC), polyamide (PA), polyethylene (PE), polyester (PES) or polyethylene terephthalate (PTF), preferably said surfaces being present in a medical clinic, emergency department, hospital, dental clinic, playground, kindergarten, school or washrooms and toilet facilities for example present in public or private facilities or for example in supermarkets and shopping malls or playgrounds.

10. The method according to claim 7 or 8 or 9, wherein said finished product PF is preferably applied on indoor or outdoor surfaces, for example made of wood, steel, aluminium, fabric, non-woven fabric, hide, leather or glass; preferably said finished product PF is applied on/over said surfaces by means of a spray, roller or brush technique.

**Patentansprüche**

1. Fertigprodukt PF, umfassend ein Halbfertigprodukt PS und ein Anstrichmittel; wobei:

  - das Halbfertigprodukt PS eine Mischung M und ein Harz umfasst; wobei
  - die Mischung M (a) eine Usninsäure natürlichen Ursprungs und/oder (b) ein verwandtes Salz davon umfasst oder alternativ daraus besteht, oder
  - die Mischung M eine Einschlussverbindung (ci) umfasst oder alternativ daraus besteht, die (i) eine Usninsäure natürlichen Ursprungs oder ein Salz davon oder Mischungen davon und ii) ein Beta-Cyclodextrin umfasst oder alternativ daraus besteht;
  - wobei die (a) eine Usninsäure natürlichen Ursprungs in racemischer Form 50% (+) und 50% (-) oder in rechtsdrehender Form D(+) vorliegt, und
  - wobei das (b) eine Usninsäure-Salz natürlichen Ursprungs ein Salz eines Alkali- oder Erdalkalimetalls ist; vorzugsweise ist die Usninsäure natürlichen Ursprungs ein Usninsäure-Natriumsalz, und wobei
  - das Halbfertigprodukt PS ein Harz umfasst, das ausgewählt ist aus der Gruppe umfassend oder alternativ bestehend aus Polyurethan-, Urethan-, Polyacryl-, Acryl-, Polyvinyl-, Vinyl-, Polyamid- oder Amidpolymeren oder -harzen.

2. Fertigprodukt PF nach Anspruch 1, wobei das Anstrichmittel bevorzugt ausgewählt ist aus der Gruppe umfassend oder alternativ bestehend aus Anstriche(n), Emaillen oder Lacke(n); bevorzugt sind die Anstriche, Emaillen oder Lacke bevorzugt ausgewählt aus wasserlösemittelbasiert oder organisch lösemittelbasiert.

3. Fertigprodukt PF nach Anspruch 1 oder 2, wobei das Anstrichmittel vorzugsweise im flüssigen, Dispersions- oder wässrigen Dispersionszustand vorliegen kann.

4. Fertigprodukt PF nach einem der Ansprüche 1-3, wobei das Halbfertigprodukt PS in dem Fertigprodukt PF in einer Gewichtsmenge vorhanden ist, die von 0,1 % bis 10 %; vorzugsweise von 0,5 % bis 8 % enthalten ist; noch bevorzugter von 1 % bis 6 %, zum Beispiel 1 %, 2 %, 3 %, 4 % oder 5 %, bezogen auf das Gewicht des Anstrichmittels.

5. Verwendung eines Fertigprodukts PF nach einem der Ansprüche 1-4, wobei das Fertigprodukt PF als antivirales Mittel, vorzugsweise gegen das humane Coronavirus SARS-CoV2, verwendet wird.

6. Verwendung eines Fertigprodukts PF nach einem der Ansprüche 1-4, wobei das Fertigprodukt PF als antibakteriell, antibakteriell proliferativ, bakteriostatisch, mikrobizid, Anti-Schimmel, Anti-Hefe (zum Beispiel *Candida*), Anti-Pilz oder antimykotisch (zum Beispiel *Saccharomycetes),* vorzugsweise gegen grampositive und/oder gramnegative Bakterien, wie zum Beispiel solche mit dem wissenschaftlichen Namen *Klebsiella*, Enterobatteriacee, *Enterobacter, Pseudomonas* und *Escherichia,* verwendet wird.

7. Verfahren zum Lassen einer Oberfläche, antiviral zu werden, vorzugsweise gegen das humane Coronavirus SARS-CoV2, wobei das Verfahren das Auftragen - mittels Sprüh-, Walzen- oder Pinseltechnik - des Fertigprodukts PF auf die Oberfläche nach einem der Ansprüche 1-4 vorsieht.

8. Verfahren zum Lassen einer Oberfläche als anti-bakteriell, anti-bakteriell proliferativ, bakteriostatisch, mikrobizid, Anti-Schimmel, Anti-Hefe (zum Beispiel *Candida*), Anti-Pilz oder antimykotisch (zum Beispiel *Saccharomycetes*) zu werden, vorzugsweise gegen grampositive und/oder gramnegative Bakterien, wie zum Beispiel solche mit dem wissenschaftlichen Namen *Klebsiella, Enterobatteriacee, Enterobacter, Pseudomonas* und *Escherichia,* wobei das Verfahren das Auftragen - mittels Sprüh-, Walzen- oder Pinseltechnik - des Fertigprodukts PF auf die Oberfläche nach einem der Ansprüche 1-4 vorsieht.

9. Verfahren nach Anspruch 7 oder 8, wobei das Fertigprodukt PF auf/über horizontale oder vertikale Oberflächen aufgetragen wird, beispielsweise Böden, Wände oder Decken, beispielsweise gefertigt aus Beton, Kalk oder Gipskarton, Linoleum oder Polyvinylchlorid (PVC), Polyamid (PA), Polyethylen (PE), Polyester (PES) oder Polyethylenterephthalat (PTF), wobei die Oberflächen vorzugsweise in einer medizinischen Klinik, Notaufnahme, Krankenhaus, Zahnklinik, Spielplatz, Kindergarten, Schule oder Waschräumen und Toiletteneinrichtungen vorhanden sind, beispielsweise in öffentlichen oder privaten Einrichtungen oder beispielsweise in Supermärkten und Einkaufszentren oder Spielplätzen.

10. Verfahren nach Anspruch 7 oder 8 oder 9, wobei das Fertigprodukt PF vorzugsweise auf Innen- oder Außenoberflächen, beispielsweise gefertigt aus Holz, Stahl, Aluminium, Gewebe, Vlies, Haut, Leder oder Glas, aufgetragen wird; vorzugsweise wird das Fertigprodukt PF mittels einer Sprüh-, Walzen- oder Pinseltechnik auf/über die Oberflächen aufgetragen.

**Revendications**

1. Produit fini PF comprenant un produit semi-fini PS et un produit de peinture ; dans lequel :

    - ledit produit semi-fini PS comprend un mélange M et une résine ; dans lequel
    - ledit mélange M comprend ou, alternativement, est constitué (a) d'un acide usnique d'origine naturelle et/ou (b) d'un sel relatif de celui-ci, ou
    - ledit mélange M comprend ou, alternativement, est constitué d'un composé d'inclusion (ci) comprenant ou, alternativement, étant constitué (i) d'un acide usnique d'origine naturelle, ou d'un sel de celui-ci, ou des mélanges de ceux-ci, et ii) d'une bêta-cyclodextrine ;
    - dans lequel ledit (a) acide usnique d'origine naturelle est sous forme racémique 50 % (+) et 50 % (-), ou sous forme dextrogyre D(+), et
    - dans lequel ledit (b) un sel d'acide usnique d'origine naturelle est un sel d'un métal alcalin ou alcalino-terreux ; de préférence, ledit acide usnique d'origine naturelle est un sel de sodium d'acide usnique, et dans lequel
    - ledit produit semi-fini PS comprend une résine qui est choisie dans le groupe comprenant ou, alternativement, constitué de polymères ou de résines de polyuréthane, d'uréthane, de polyacrylique, d'acrylique, de polyvinyle, de vinyle, de polyamide ou d'amide.

2. Produit fini PF selon la revendication 1, dans lequel ledit produit de peinture est de préférence choisi dans le groupe comprenant ou, alternativement, constitué de vernis, d'émaux ou de peintures ; de préférence, lesdits vernis, émaux ou peintures sont de préférence choisis à base de solvant aqueux ou à base de solvant organique.

3. Produit fini PF selon la revendication 1 ou 2, dans lequel ledit produit de peinture peut de préférence être à l'état liquide, de dispersion ou de dispersion aqueuse.

4. Produit fini PF selon l'une quelconque des revendications 1-3, dans lequel ledit produit semi-fini PS est présent dans ledit produit fini PF dans une quantité en poids comprise entre 0,1 et 10 % ; de préférence entre 0,5 et 8 % ; plus préférablement encore entre 1 et 6 %, par exemple 1, 2, 3, 4 ou 5 %, par rapport au poids du produit de peinture.

5. Utilisation d'un produit fini PF selon l'une quelconque des revendications 1-4, dans laquelle ledit produit fini PF est utilisé comme antiviral, de préférence contre le coronavirus humain SARS-CoV2.

6. Utilisation d'un produit fini PF selon l'une quelconque des revendications 1-4, dans laquelle ledit produit fini PF est utilisé comme antibactérien, contre la prolifération bactérienne, bactériostatique, microbicide, antimoisissure, antilevure (par exemple *Candida*), antifongique ou antimycosique (par exemple *Saccharomycetes*), de préférence contre les bactéries à Gram-positif et/ou à Gram-négatif, telles que, par exemple, celles ayant le nom scientifique de *Klebsiella, Enterobatteriacee, Enterobacter, Pseudomonas* et *Escherichia.*

7. Procédé destiné à rendre une surface antivirale, de préférence contre le coronavirus humain SARS-CoV2, ledit procédé prévoit l'application - au moyen d'une technique de pulvérisation, au rouleau ou au pinceau - dudit produit fini PF sur ladite surface, selon l'une quelconque des revendications 1-4.

8. Procédé destiné à rendre une surface antibactérienne, contre la prolifération bactérienne, bactériostatique, microbicide, antimoisissure, antilevure (par exemple *Candida*), antifongique ou antimycosique (par exemple *Saccharomycetes*), de préférence contre les bactéries à Gram-positif et/ou Gram-négatif, telles que par exemple celles ayant le nom scientifique de *Klebsiella, Enterobatteriacee, Enterobacter, Pseudomonas* et *Escherichia,* ledit procédé prévoit l'application - au moyen d'une technique de pulvérisation, au rouleau ou au pinceau - dudit produit fini PF sur ladite surface, selon l'une quelconque des revendications 1-4.

9. Procédé selon la revendication 7 ou 8, dans lequel ledit produit fini PF est appliqué sur/au-dessus de surfaces horizontales ou verticales, par exemple des sols, des murs ou des plafonds, par exemple en béton, en chaux ou en plaques de plâtre, en linoléum, ou en polychlorure de vinyle (PVC), en polyamide (PA), en polyéthylène (PE), en polyester (PES) ou en polytéréphtalate d'éthylène (PTF), de préférence, lesdites surfaces se trouvent dans une clinique médicale, un service d'urgence, un hôpital, une clinique dentaire, un terrain de jeu, un jardin d'enfants, une école ou des toilettes et des installations sanitaires, par exemple dans des installations publiques ou privées ou, par exemple, dans des supermarchés et des centres commerciaux ou des terrains de jeu.

10. Procédé selon la revendication 7 ou 8 ou 9, dans lequel le produit fini PF est de préférence appliqué sur des surfaces intérieures ou extérieures, par exemple en bois, en acier, en aluminium, en tissu, en tissu non tissé, en peau, en cuir ou en verre ; de préférence, ledit produit fini PF est appliqué sur/au-dessus desdites surfaces au moyen d'une technique de pulvérisation, au rouleau ou au pinceau.

*Usnea (Longissima Ach)*

Solvent ⟶ →

┌─────────────────────────────┐
│  Maceration, extraction and │
│        concentration        │
└─────────────────────────────┘

⟶ Solvent recovery

┌─────────────────────────────┐
│  Crystallisation and filtration │
└─────────────────────────────┘

Solvent ⟶ →

┌─────────────────────────────┐
│   Dissolution, filtration and │
│         concentration        │
└─────────────────────────────┘

⟶ Solvent recovery

┌─────────────────────────────┐
│  Crystallisation and filtration │
└─────────────────────────────┘

┌─────────────────────────────┐
│      Drying and grinding     │
└─────────────────────────────┘

┌─────────────────────────────┐
│          Usnic acid          │
└─────────────────────────────┘

FIG. 1

FIG. 2

FIG. 3

FIG. 4

FIG. 5

FIG. 6

FIG. 7

FIG. 8

FIG. 9

FIG. 10

SED 20.0 kV WD 11.1 mm Std.-PC 40.0 HighVac. x300 50 µm
NOR

FIG. 11

SED 20.0 kV WD 11.1 mm Std.-PC 40.0 HighVac. x150 100 μm
NOR

FIG. 12

FIG. 13

FIG. 14

**EP 4 247 902 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016020774 A
- WO 2012123803 A

**Non-patent literature cited in the description**

- *CHEMICAL ABSTRACTS*, 128446-35-5
- *CHEMICAL ABSTRACTS*, 125-46-2
- *CHEMICAL ABSTRACTS*, 7562-61-0
- *CHEMICAL ABSTRACTS*, 34769-44-3
- *CHEMICAL ABSTRACTS*, 55965-84-9